# FASCICULE DE BREVET EUROPEEN

(11) **EP 0 319 395 B1**
(45) Date de publication et mention de la délivrance du brevet: **20.04.1994**
(21) Numéro de dépôt: 88402998.4
(22) Date de dépôt: 29.11.1988
(51) Int. Cl.: G01S 13/87, G01S 5/02, G01C 21/20

(54) **Système de contrôle ou d'aide à la navigation maritime ou à la circulation**
System zur Überwachung oder zur Hilfe in maritimer Navigation oder im Verkehr
System for controlling or assisting in maritime navigation or in traffic

(30) Priorité: 01.12.1987 FR 8716642
(43) Date de publication de la demande: 07.06.1989
(73) Titulaire: FEDERATION FRANCAISE DE VOILE, F-75116 Paris (FR); COMPAGNIE GENERALE DE GEOPHYSIQUE, F-91301 Massy Cédex (FR)
(72) Inventeur: Gouard, Philippe, F-44380 Pornichet (FR); Boucquaert, Francois, F-46150 Catus (FR)
(74) Mandataire: Martin, Jean-Jacques

(56) Documents cités:
- EP-A- 0 247 949
- FR-A- 2 356 153
- GB-A- 2 025 722
- US-A- 3 691 978
- US-A- 3 774 215
- US-A- 4 340 936

## Description

La présente invention est relative à un système de contrôle ou d'aide à la navigation maritime ou à la circulation conforme au préambule de la revendication 1. Un système de ce type est divulgué dans son principe, par exemple, par le brevet US-A-3 774 215.

Actuellement, les systèmes de contrôle ou d'aide à la navigation maritime en temps réel ne peuvent guère être présentés que soit comme comportant des systèmes de visualisation de type radar soit comme des systèmes permettant le routage par radiotéléphone en transmission en BLU, par la transmission de points de passage désigné en langage anglo-saxon par "way-point".

Ces systèmes sont bien entendu utiles mais ils présentent l'inconvénient d'une faible souplesse d'utilisation. En effet, s'ils permettent au plus d'assurer un relevé en temps réel de la position de vaisseaux, ces systèmes ne permettent pas une redistribution globale de l'information de navigation au niveau de chacun des vaisseaux, la transmission d'information d'un poste central de contrôle à chaque vaisseau se limitant, pour l'essentiel, à une liaison radiophonique entre pilote de chaque vaisseau et instance de contrôle de navigation.

La présente invention a pour but de remédier aux inconvénients précités par la mise en oeuvre d'un système de contrôle de la navigation maritime ou de la circulation dans lequel l'information de paramètres de navigation ou de circulation d'un ou d'une pluralité de vaisseaux, information normalement disponible auprès de la seule instance de contrôle, peut à discrétion être rendue disponible, pour chacun des vaisseaux ou mobiles séparément ou simultanément.

Un autre objet de la présente invention est la mise en oeuvre d'un système d'aide à la navigation ou à la circulation dans lequel le pilote de chaque vaisseau dispose d'un système interactif lui permettant de bénéficier en temps réel d'une aide à la navigation ou à la circulation.

Un autre objet de la présente invention est la mise en oeuvre d'un système d'aide à la navigation d'une très grande souplesse d'emploi, ce système étant susceptible de présenter un caractère évolutif et adaptatif dans la mesure où celui-ci permet de tenir compte tant de la spécificité de paramètres de navigation propres à chaque vaisseau que de l'utilisation ou de la situation d'utilisation de ce dernier.

Un autre objet de la présente invention est la mise en oeuvre, dans le cas où le ou les vaisseaux considérés sont constitués par des voiliers, d'un système d'aide à la gestion de régate et d'aide à la navigation de compétition.

Le système de contrôle de ou d'aide à la navigation maritime ou à la circulation d'une pluralité de vaisseaux ou mobiles, objet de l'invention, est défini par la revendication 1.

Le système de contrôle de la navigation maritime d'une pluralité de vaisseaux ou mobiles objet de l'invention trouve application à la surveillance de vaisseaux ou mobiles à distance, télésurveillance, au pilotage de vaisseaux pour l'accès de ces derniers dans les zones portuaires, au routage de vaisseaux à la surveillance de flottilles de bâteaux de pèche, à la surveillance et à la gestion en direct de manifestations sportives, à l'entraînement au contrôle et à la surveillance de bâtiments militaires avec code d'identification secret, au déclenchement d'alarme en temps réel pour la surveillance d'une flottille de bateaux, au contrôle de véhicules automobiles en situation de course ou de rallye.

D'autres caractéristiques et avantages du système de contrôle et/ou d'aide à la navigation maritime ou à la circulation d'une pluralité de vaisseaux ou mobiles, objet de l'invention, seront mieux compris à la lecture de la description et à l'observation des dessins ci-après dans lesquels :
- la figure 1 au point a) et b) représente de manière schématique, un système de contrôle de la navigation maritime ou de circulation objet de l'invention,
- la figure 2 représente au point a), b) et c) une variante de réalisation particulière d'un système de navigation ou de circulation objet de l'invention,
- la figure 3 au point a) et b) représente une première variante, non limitative, d'un système d'aide à la navigation ou à la circulation conforme à l'objet de l'invention,
- les figures 4a et 4b représentent une deuxième variante, préférentielle, d'un système d'aide à la navigation maritime conforme à l'objet de l'invention,
- les figures 5a et 5b représentent, à titre d'exemple non limitatif, un mode de réalisation particulièrement avantageux d'un système d'aide à la navigation, conforme au mode de réalisation de la figure 4a et 4b, plus particulièrement adapté à l'aide à la navigation d'un vaisseau constitué par un voilier,
- la figure 6 représente, à titre d'exemple, non limitatif, un mode d'affichage d'une page écran particulièrement adapté à l'aide à la navigation de vaisseaux constitués par des voiliers,
- la figure 7a et la figure 7b représentent respectivement en coordonnées polaires et cartésiennes un abaque des données ou paramètres intrinsèques à un vaisseau considéré, tel qu'un voilier, ces paramètres étant constitués par la vitesse exprimée en noeuds du voilier par rapport à l'angle de direction du vent par rapport à l'axe du vaisseau,
- la figure 8 représente dans le cas où le vaisseau est constitué par un voilier un abaque d'aide à la décision relative au changement optimal des voiles d'un voilier,
- la figure 9 représente un abaque de définition d'un voilier barré de manière idéale permettant de prendre en compte des paramètres intrinsèques aux qualités du barreur,
- la figure 10 représente un schéma représentatif d'un parcours de régate officielle classique matérialisé par un parcours fermé comprenant au moins un premier près, et un premier et un deuxième parcours au largue,
- la figure 11 représente une page écran de visualisation du programme tactique d'aide à la navigation dans le cas où ledit programme tactique correspond à un module de type mode départ d'un course officielle ou régate,
- la figure 12a représente une page écran de visualisation du programme tactique d'aide à la navigation dans le cas où ledit programme tactique correspond à un module de type module de navigation plus particulièrement désigné sous le nom de module de course, et la figure 12b représente une vue plus détaillée des lignes de cadre ou "lay-lines" de la figure 12a.
- la figure 13 représente une page-écran de visualisation du programme tactique d'aide à la navigation dans le cas où celui-ci correspond à un module course et en particulier à une procédure de visualisation de la direction du vent réel ou procédure girouette.
- la figure 14 représente une page-écran de visualisation du programme tactique d'aide à la navigation dans le cas ou celui-ci correspond à un module course et en particulier à une procédure de navigation au largue.
- la figure 15 représente un organigramme général du programme tactique montrant l'agencement relatif des différents modules de programme.

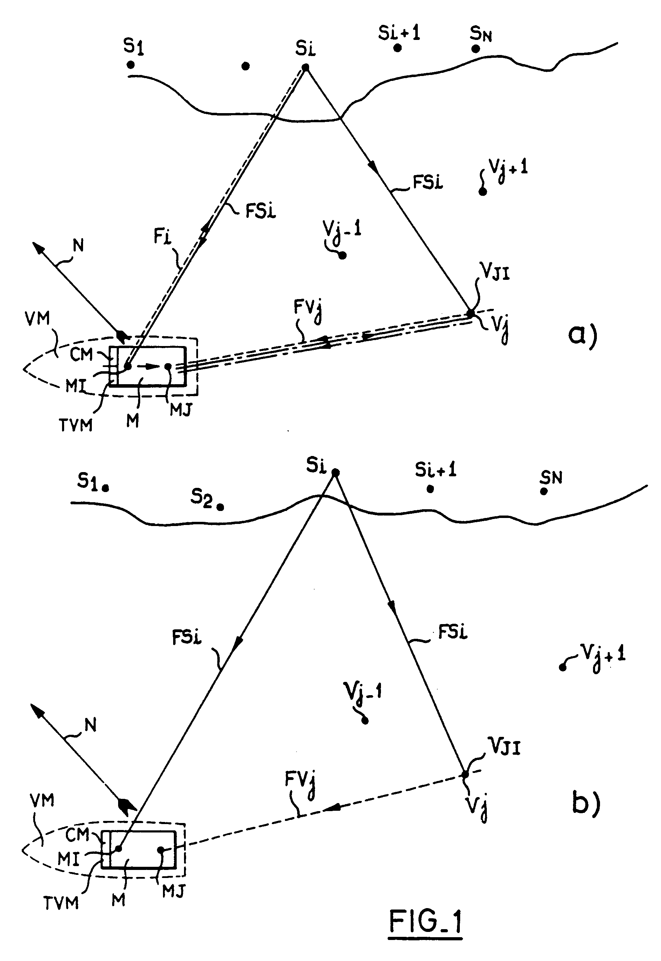

L'invention sera tout d'abord décrite en liaison avec la figure 1 au point a) et b) de celle-ci.

Conformement aux figures précitées, le système de contrôle de la navigation maritime ou de la circulation d'une pluralité de vaisseaux ou mobiles, notés Vj sur la figure 1 précitée, comporte un système de radionavigation de référence, celui-ci comportant au moins deux sources balises de référence notées Si, Si+1 sur la figure précitée.

Un site central M de contrôle de navigation, fixe ou mobile, est en outre prévu. Le site central M et les vaisseaux ou mobiles Vj sont chacuns munis respectivement, d'une part, d'un premier moyen de communication noté MI entre le site central M et les sources balises de référence notées Si, Si+1 et d'un deuxième moyen de communication Mj entre le site central M et chaque vaisseau ou mobile Vj. Les vaisseaux ou mobiles Vj sont d'autre part munis d'un moyen de communication, noté Vij, entre chaque source balise de référence Si, Si+1 et chaque vaisseau ou mobile Vj. Sur la figure 1 au point a) et b) de celle-ci, on a représenté la communication entre la source balise Si et les différents moyens de communication.

En outre, le site central M comporte des moyens calculateurs, notés CM, assurant, à partir du calcul des distances MSi et SBj séparant le site central M et chaque vaisseau ou mobile Vj de chaque balise de référence Si, Si+1, de calculer la position de site M et de chaque vaisseau ou mobile Vj par rapport au système de radionavigation de référence. Bien entendu, le calculateur CM permet ainsi de calculer des coordonnées dites géométriques par rapport aux stations balises de référence Si, Si+1.

En outre, des moyens d'affichage, notés TVM, en temps réel de la position de chaque vaisseau ou mobile Vj par rapport au site central M sont prévus sur le site central M.

Conformément à un aspect particulier du système de contrôle de navigation objet de l'invention, le système de radionavigation de référence est un système de radionavigation fixe à localisation de type hyperbolique ou circulaire. Ainsi qu'on le comprendra, sur la figure 1 au point a) de celle-ci, le système de radionavigation utilisé est un système de radionavigation de type circulaire.

Dans le cas de la figure 1 au point a) de celle-ci, le protocole de localisation, dans le cas d'un système de radionavigation de type circulaire, peut consister à interroger au moyen du premier moyen de communication MI chaque source balise Si, Si+1 ou une pluralité de celles-ci pour établir, à partir des temps de trajet aller-retour entre le site central M et chaque source balise de référence, Si, Si+1, les distances successives MSi séparant le site central M de chaque source balise Si, Si+1. La position du site central M est alors déterminée à partir des positions des sources balises de référence notées Si, Si+1.

Sur la figure 1 au point a), on a noté Fi la fréquence du signal d'interrogation de chacune des sources Si par les moyens de communication Mi et FSi, la fréquence d'émission de chaque source Si.

Simultanément à la réception des signaux d'émission de fréquence FSi émis par la source balise correspondante Si, le signal d'émission est en outre reçu au moyen du moyen de communication Vji de chaque vaisseau ou mobile Vj. Le signal d'émission de fréquence FSi, FSi+1 est émis en réponse à l'interrogation par la source balise de référence considérée. Le signal d'émission reçu par les moyens de communication Vji précédemment cités est en outre transmis par l'intermédiaire du deuxième moyen de communication Mj au site central M. Ceci permet de déterminer le trajet en circuit fermé noté M, Si, Vj, M.

Une interrogation au moyen du deuxième moyen de communication Mj de chaque vaisseau Vj , permet ensuite de déterminer la distance séparant le site central M de chaque vaisseau ou mobile Vj.

La position de chaque vaisseau ou mobile Vj par localisation de type circulaire par rapport au système de radionavigation de référence peut alors être déterminée à partir des distances, notées SiBj, Si+1Bj, séparant chaque vaisseau ou mobile Vj des sources balises de référence Si, Si+1.

Ainsi qu'on l'a représenté en figure 1, au point b) de celle-ci, le système de radionavigation de référence peut être constitué par un système de radionavigation à localisation de type hyperbolique.

Dans ce cas, les mêmes références représentent les mêmes éléments que dans le cas de la figure 1 au point a) avec les adaptations nécessaires correspondantes.

Dans ce cas, le protocole de localisation peut alors consister à recevoir, à l'aide du premier moyen de communication MI, la séquence d'émission émise par chacune des sources balises de référence Si, Si+1. La différence de temps de trajet entre un point fixe déterminé et deux émissions successives de deux sources balises de référence Si, Si+1 constituant le système de radionavigation de type hyperbolique peut être déterminée par un récepteur situé au niveau du point fixe précité.

La séquence d'émission émise par chacune des sources balises de référence Si, Si+1 permet d'établir la différence de distance, notée MSi-MSi+1, entre la distance du site central M et deux sources balises de référence Si, Si+1, et ce pour une pluralité de ces sources balises de référence. La position du point correspondant au site central M peut alors être déterminée par rapport aux positions des sources balises de référence. Simultanément à la réception du signal d'émission de fréquence FSi de la source balise de référence Si, le protocole de localisation consiste en outre à recevoir au moyen du moyen de communication Vji de chaque vaisseau ou mobile Vj, la séquence d'émission émise par chaque source balise de référence Si, Si+1. En outre, un signal de réponse à l'émission de fréquence FSi de chaque source balise de référence Si est retransmis au moyen du moyen de communication Vji au site central M en vue de déterminer la distance du trajet composite Si, Vj, M entre chaque source balise de référence Si, le vaisseau ou mobile Vj correspondant et le site central M respectivement.

La position de chaque vaisseau ou mobile Vj par localisation de type hyperbolique par rapport au système de radionavigation de référence peut alors être déterminée à partir de la différence des distances, notées SiVj-Si+1Vj, séparant le vaisseau ou mobile Vj des sources balises de référence Si, Si+1.

Bien entendu, la retransmission, au moyen du moyen de communication Vji, au site central M d'un signal de réponse à l'émission de chaque source balise de référence Si, peut être effectuée à faible puissance et à une fréquence porteuse de valeur différente des fréquences d'émission FSi des sources balises de référence Si engendrant la séquence d'émission. De manière classique, la retransmission est synchronisée sur la séquence d'émission.

Selon un aspect particulièrement avantageux du système de contrôle de navigation maritime objet de l'invention, ainsi que représenté en figure 1 au point a) et b) de celle-ci, le site central M est mobile et constitué par un vaisseau maître, tel qu'un vaisseau pilote par exemple.

En outre, ainsi qu'il sera décrit ci-après dans la description, le vaisseau maître peut être constitué dans le cas de régate de voiliers par le bateau comité à partir duquel la gestion de la régate est assurée.

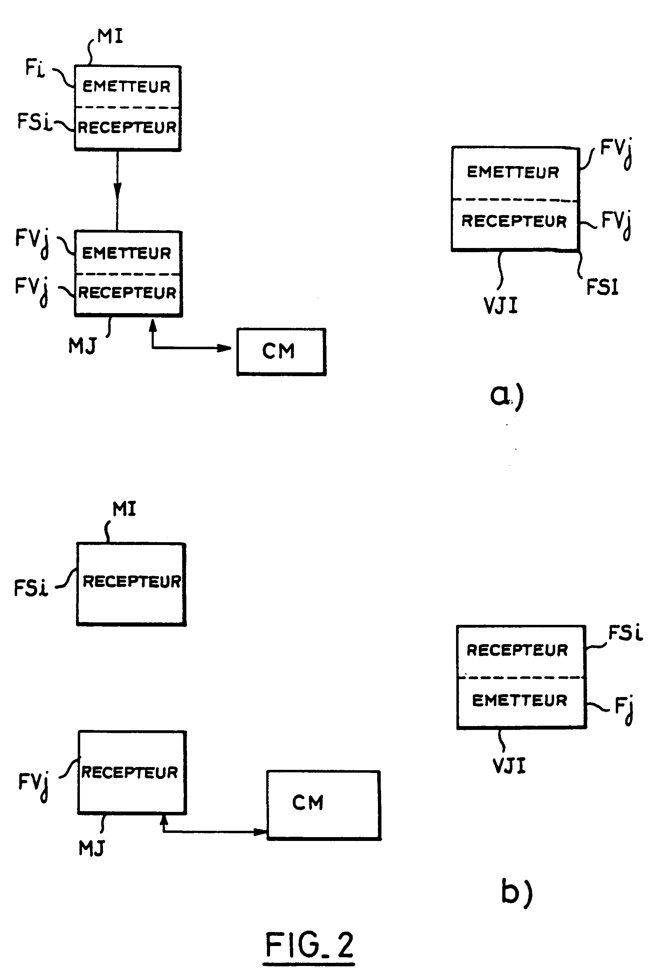

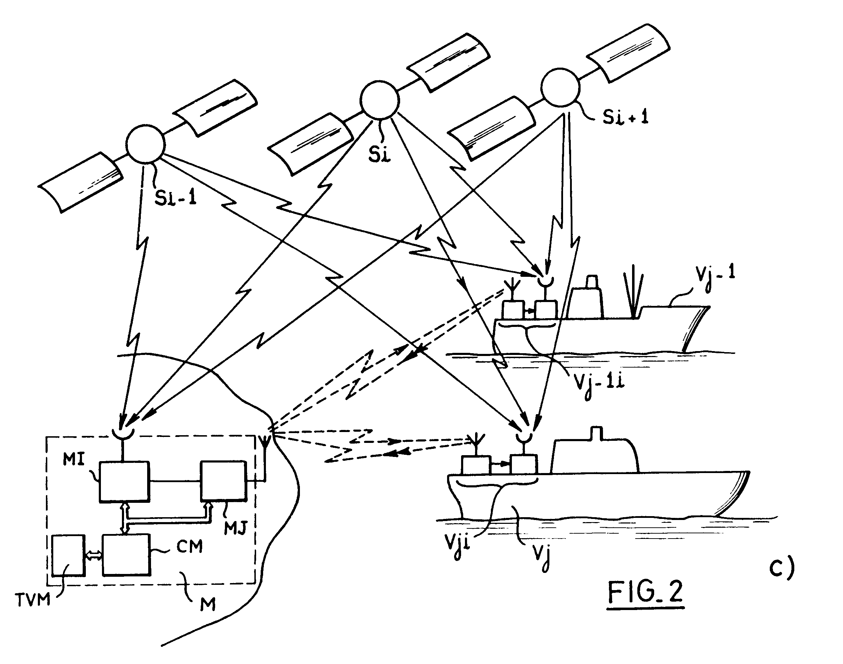

Ainsi qu'on l'a représenté en figure 2 au point a) et b) de celle-ci, lorsque respectivement le système de radionavigation est constitué par un système de radionavigation de type circulaire ou hyperbolique, le site central M comporte un premier moyen de communication MI émetteur à la fréquence Fi et récepteur à la fréquence FSi. Le deuxième moyen de communication Mj du site central M est émetteur à la fréquence FVj et récepteur à la fréquence FVj. Les moyens récepteurs Mj sont interconnectés aux moyens de calcul CM.

Les deuxièmes moyens de communication Vij sont émetteurs à la fréquence FVj et récepteurs à la fréquence FSi et FVj.

De la même façon, au point b) de la figure 2, dans le cas d'un système de radionavigation de type hyperbolique, les premiers moyens de communication MI sont récepteurs à la fréquence FSi et les moyens de communication Mj sont récepteurs à la fréquence FVj. Ces moyens récepteurs ou deuxièmes moyens récepteurs Mj sont interconnectés aux moyens calculateurs CM. Les deuxièmes moyens de communication Vji sont récepteurs à la fréquence FSi et émetteurs à la fréquence FVj.

Dans le cas avantageux non limitatif où le système de radionavigation est un système de radionavigation de type hyperbolique, le moyen de communication Vji de chaque vaisseau ou mobile Vj permettant la communication entre chaque source balise de référence Si, Si+1 et chaque vaisseau ou mobile Vj et la retransmission vers le deuxième moyen de communication Mj du site central M comprend de manière avantageuse un répondeur.

De manière avantageuse, le moyen de communication Vji constitué par le répondeur pourra être réalisé au moyen d'une balise de type SB5, ainsi que notamment les moyens de communication constituant deuxième moyen de communication Mj du site central M. Ce type de balise permet de localiser simultanément le site central M et une pluralité de vaisseaux ou mobile Vj. Ce système de radiocommmunication est commercialisé par la Société d'Etude de Recherche et de Construction Electronique SER CEL sous la désignation commerciale SYLEDIS.

Selon une autre caractéristique particulièrement avantageuse du système de contrôle de la navigation maritime d'une pluralité de vaisseaux ou mobiles Vj objet de l'invention, le site central M est fixe et constitué par un poste central à terre au voisinage des installations portuaires.

Dans le cas où les mobiles sont des véhicules automobiles, en situation de course ou de rallye, le site central M est fixe et peut être disposé en surplomb du circuit de course ou de la zone de rallye. Le site central M peut alors être embarqué à bord d'un ballon sonde ou analogue par exemple.

Le système de contrôle de la navigation maritime ou de la circulation d'une pluralité de vaisseaux ou mobiles objet de l'invention n'est pas limité à l'utilisation d'un système de radionavigation de référence terrestre fixe à localisation de type hyperbolique ou circulaire.

En particulier, ainsi que représenté en figure 2c, un système de radiolocalisation constitué par un réseau de satellites artificiels peut facilement être utilisé. Un tel réseau de satellites artificiels pourra consister à titre d'exemple non limitatif, de façon particulièrement avantageuse, en un réseau tel que le réseau de satellites GPS (global Positionning System) constituant le système NAVSTAR.

Ce type de système permet un positionnement dans les trois axes de coordonnées X, Y, Z, et le positionnement tridimensionnel d'un mobile quelconque nécessite la réception simultanée d'au moins quatre satellites, le positionnement dans un plan X, Y, tangent à la surface du globe terrestre par exemple, la réception de trois satellites.

De manière semblable aux systèmes de radiolocalisation terrestres, le système de radiolocalisation par satellite, tel que le système GPS, permet d'obtenir les informations de position par mesure du temps de propagation des signaux transmis par les satellites vers un mobile récepteur Vj et en définitive de la distance séparant, les mobiles Vj et le site central M de chaque satellite jouant le rôle de balises de référence Si, Si+1.

Dans un tel mode de réalisation, ainsi que représenté en figure 2c, le site central M, lequel à titre d'exemple non limitatif est représenté à terre, comporte avantageusement un récepteur de signaux GPS, constituant les premiers moyens de communication MI, et une station d'émission constituant les deuxièmes moyens de communication MJ. Les premiers moyens de communication MI sont récepteurs des signaux GPS émis par les satellites et peuvent être avantageusement constitués par un récepteur GPS désigné par la désignation commerciale TR5S et commercialisé par la société SER CEL. Les deuxièmes moyens de communication MJ pourront avantageusement être constitués par un système émetteur-récepteur permettant d'assurer la liaison bidirectionnelle mobile Vj site central M pour la transmission des paramètres de position mesurés ou de codes d'identification relatif à chaque mobile Vj vers le central M et la transmission inverse sélective de ce dernier vers chaque mobile Vj d'informations utiles pour l'aide à la navigation ou à la circulation du mobile Vj correspondant.

Chacun des mobiles ou vaisseaux Vj comporte des moyens de communication Vji. Les moyens précités peuvent être constitués par des moyens récepteurs des signaux GPS émis par les satellites constituant source balise de référence, et en particulier par récepteur GPS de type TR5S précédemment cité. Au récepteur GPS constitutif des moyens de communication Vji est associé un système émetteur-récepteur de communication avec les deuxièmes moyens de communication MJ du site central. Dans ce cas, le récepteur GPS constitutif des premiers moyens de communication MI placé au niveau du site central M, de coordonnées parfaitement connues, permet notamment de calculer les corrections d'erreurs à chaque mobile Vj considéré. Les données brutes GPS peuvent être corrigées avant calcul effectif des positions de chaque mobile Vj au niveau des moyens de calcul CM du site central M. On notera que le système de positionnement par satellite du genre GPS précédemment décrit permet un positionnement avec une position de l'ordre de la dizaine de centimètres, la portée des deuxièmes moyens de communication MJ du site central M étant de l'ordre de 1500 à 2000 km.

Bien entendu, en fonction de l'application utilisée, les mobiles soumis au système de contrôle et ou d'aide à la circulation ou à la navigation objet de l'invention peuvent être constitués par des aéronefs, des vaisseaux ou navires ou des véhicules terrestres.

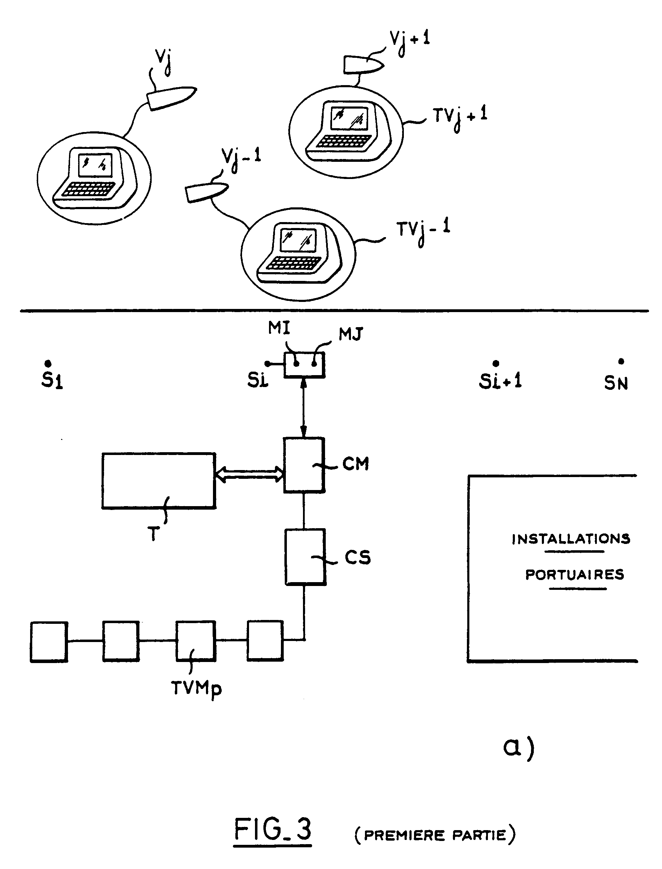

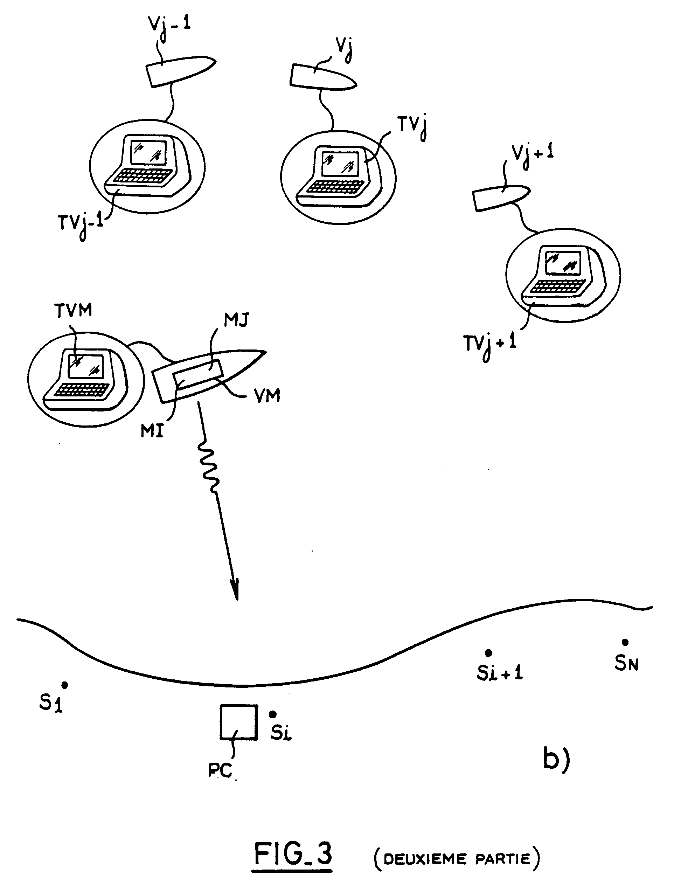

Sur la figure 3a on a représenté un tel système de contrôle de navigation maritime. Lorsque le site central M est fixe et constitue par un poste central à terre, celui-ci peut avantageusement comporter directement connecté au moyen de calcul CM, un centre serveur connecté aux moyens de calcul CM par l'intermédiaire d'un MODEM par exemple, le centre serveur CS étant lui-même connecté à une pluralité de terminaux de visualisation tels que par exemple des MINITELS afin d'assurer un affichage en des lieux différents du panorama ou de la configuration de navigation des vaisseaux ou mobiles Vj. En outre, un système de téléprojection noté T peut être directement connecté aux moyens de calcul CM.

En outre, ainsi qu'on le remarquera notamment en figure 3a, et dans le cas où le système de contrôle de navigation maritime objet de l'invention est destiné à constituer un système de contrôle et d'aide à la navigation, chaque vaisseau Vj comporte, outre le moyen de communication Vji entre chaque source balise de référence Si, Si+1 et chaque vaisseau Vj, un terminal d'affichage noté TVj, TVj-1, TVj+1, permettant d'afficher en temps réel au moins la position du ou des vaisseaux d'ordre j considérés par rapport au site central M. Bien entendu, les terminaux de visualistion ou terminaux d'affichage TVj sont directement connectés aux moyens de communication Vji de chaque vaisseau Vj correspondant. Dans ce cas, les moyens de communication Vji peuvent avantageusement être constitués ainsi que décrits en liaison avec la figure 2a.

Selon un autre mode de réalisation tel que représenté en figure 3 au point b de celle-ci, le site central M peut être constitué par un vaisseau maître VM situé à proximité de la flottille de vaisseau Vj-1, Vj, Vj+1 à contrôler oú à assister en navigation, le vaisseau maître VM constituant le site central M étant muni des moyens de communication MI et MJ précédents et relié à un poste central situé à terre par liaison hertzienne. Le poste central est noté PC sur la figure 3 au point b). Le protocole d'interrogation et de localisation des vaisseaux Vj, Vj-1, Vj+1 est semblable à celui précédemment décrit, et la liaison entre le site central M et le poste central PC est effectuée par liaison hertzienne.

Selon une caractéristique particulièrement avantageuse du système de contrôle et d'aide à la navigation objet de l'invention, le terminal d'affichage TVj de chaque vaisseau Vj est constitué par un microordinateur embarqué OVj sur chaque vaisseau Vj, le microordinateur étant muni de ses éléments périphériques.

On comprendra que le système de contrôle et/ou d'aide à la navigation maritime objet de l'invention, permet le suivi automatique de bateaux tels que des voiliers, des bateaux de pêche, des bateaux de sécurité de sauvetage en mer ou des bateaux en situation d'approche en zone portuaire ou en navigation, ce suivi pouvant ainsi être effectué en temps réel.

La trajectoire obtenue à partir de programmes ou logiciels adaptés à partir des protocoles de localisation précédemment décrits par traitement des mesures de distance précitées peut être exprimée sous forme de position en coordonnées de type coordonnées cartésiennes ou géométriques, puis ensuite avantageusement être convertie en coordonnées de type latitude et longitude, ce qui permet avantageusement de tracer une route, dite route fond, pour chaque vaisseau Vj, les informations de position successives permettant de définir à la fois le cap de chaque vaisseau Vj et la vitesse de ceux-ci.

On comprendra que de manière particulièrement avantageuse, l'acquisition de la position de chaque vaisseau Vj par rapport au fond ou relief côtier, peut alors être comparée à une position dite de surface obtenue à l'aide d'instruments classiques tels que girouettes, anémomètres, capteurs de vitesse ou compas électroniques et il est alors possible de calculer notamment un vecteur représentatif en amplitude et direction du courant marin, la distance et le temps qui séparent un vaisseau Vj déterminé d'une marque ou bouée susceptible de baliser un parcours, la distance d'un bateau Vj d'un bateau Vj+1, et éventuellement dans le cas de gestion de régates, le classement en temps et en distance par exemple.

Le fait de connaître les positions et les déplacements de chaque vaisseau Vj permet également de déterminer la meilleure conduite d'un des vaisseaux Vj par rapport l'autre, notamment dans le cas de régates comportant une épreuve du type connue sous le vocable anglo-saxon de "Match Racing" à deux.

Enfin, le système de contrôle et/ou d'aide à la navigation maritime objet de l'invention permet, par traitement au site central M situé à terre par exemple, de déterminer le cap et la vitesse de chaque vaisseau Vj, les résultats étant alors retransmis sous forme de détermination d'une route optimale, pour chaque vaisseau Vj. Les balises SB5 commercialisées par la société SERCEL en France permettent de réaliser ce transfert et l'affichage correspondant de la route optimale pour chacun des vaisseaux Vj considérés.

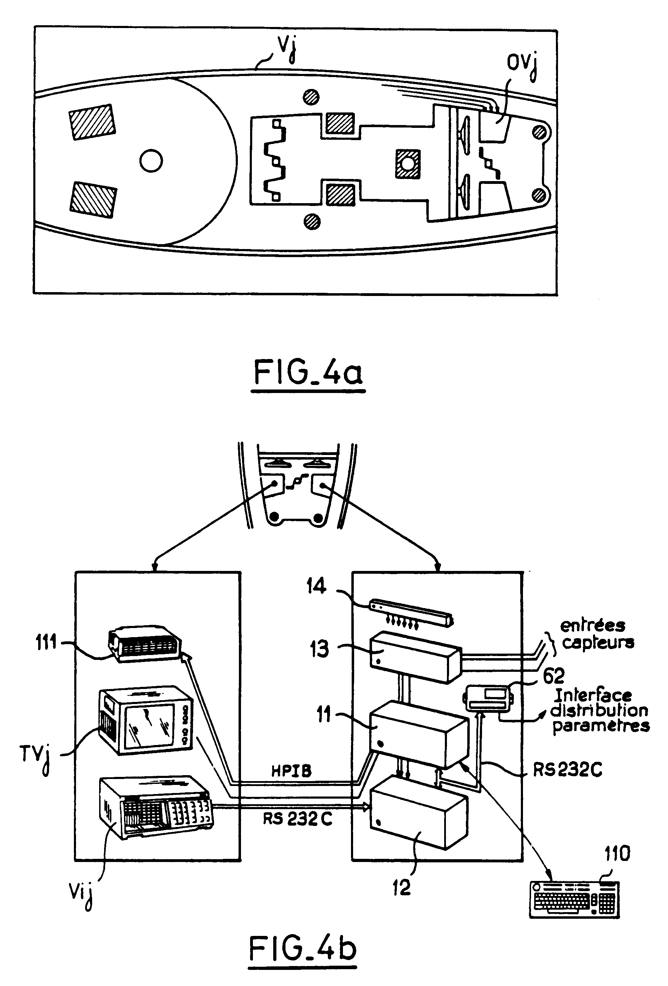

Un mode de réalisation plus particulièrement avantageux d'un système de contrôle et/ou d'aide à la navigation maritime conforme à l'objet de l'invention sera décrit en liaison avec les figures 4a et 4b dans le cas où des paramètres de navigation intrinsèques à chaque vaisseau Vj sont intégrés au système.

Ainsi qu'on l'a représenté en figure 4a et 4b, le microordinateur embarqué OVj peut avantageusement être embarqué lorsque le vaisseau Vj est constitué par un voilier par exemple dans une baie étanche. Ainsi qu'on l'a représenté notamment en figure 4b, le microordinateur embarqué OVj comporte un premier microordinateur maître, noté 11, permettant d'assurer la conduite tactique de l'aide à la navigation. Le microordinateur maître est muni de ses éléments périphériques tels que par exemple un clavier noté 110.

Le microordinateur embarqué OVj comporte également un deuxième microordinateur esclave noté 12, dit d'acquisition, également muni de ses éléments périphériques. Le deuxième microordinateur esclave 12 permet l'acquisition des données ou paramètres dynamiques du vaisseau Vj considéré et le séquencement des moyens de communication Vji. Les éléments périphériques du microordinateur maître sont consitués par le clavier 110 déjà mentionné et par exemple une imprimante notée 111, le microordinateur maître 11 étant également relié à un terminal de visualisation constituant le terminal de visualisation TVj déjà mentionné. L'ordinateur maître 11 et l'ordinateur esclave 12 peuvent avantageusement être constitués par des microordinateurs commercialisés par la société HEWLETT PACKARD sous la référence HP 9920. L'ordinateur maître 11 et l'ordinateur esclave 12 sont reliés par une liaison par BUS de type RS232C, les moyens de communication Vij du vaisseau Vj sont également reliés à l'ordinateur esclave, ou ordinateur d'acquisition, 12, par l'intermédiaire d'une liaison de type RS232C.

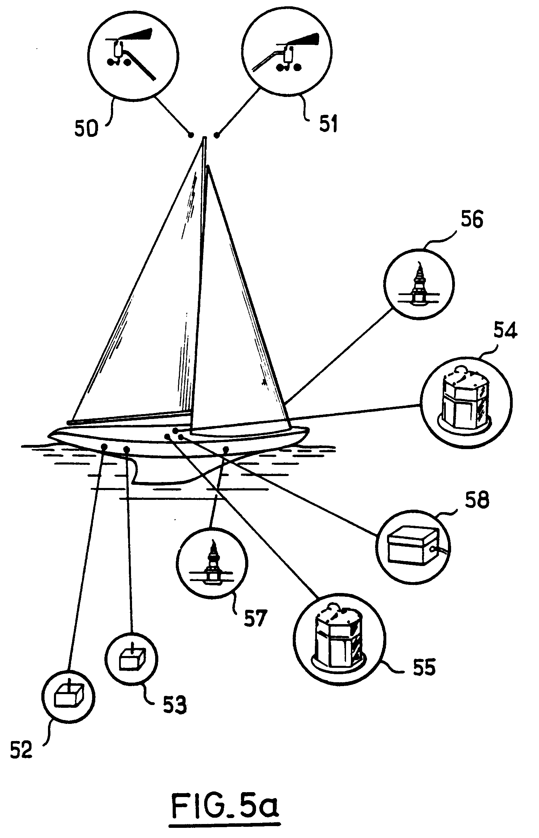

En vue d'assurer l'acquisition des paramètres dynamiques du vaisseau Vj considéré, chacun des vaisseaux Vj comporte à titre d'exemple non limitatif, lorsque les vaisseaux Vj sont constitués par des voiliers,ainsi que représenté en figure 5a, une girouette et un anémomètre de portant, notés 50, une girouette et un anémomètre de près, notés 51, un capteur d'angle de barre, noté 52, un capteur d'angle de trimmer ou volet mobile formant plan anti-dérive, noté 53, un compas bâbord 54 et un compas tribord 55, un capteur de vitesse bâbord 56 et un compas de vitesse tribord 57 et une centrale à inertie 58 délivrant une information d'inclinaison de gîte et de tangage.

Chacun des capteurs précités permet de délivrer un signal représentatif du paramètre dynamique correspondant du voilier ou vaisseau Vj, au deuxième ordinateur esclave 12. Bien entendu, la liaison entre chacun des capteurs, lesquels sont constitués par des capteurs de type classique dans le domaine de mesure correspondante, est réalisée par l'intermédiaire d'un circuit d'interface capteur, noté 13 sur la figure 4b, le circuit d'interface capteur 13 étant lui-même relié à un tableau de distribution d'énergie électrique en tension d'alimentation en 24 volts, le tableau de distribution étant noté 14.

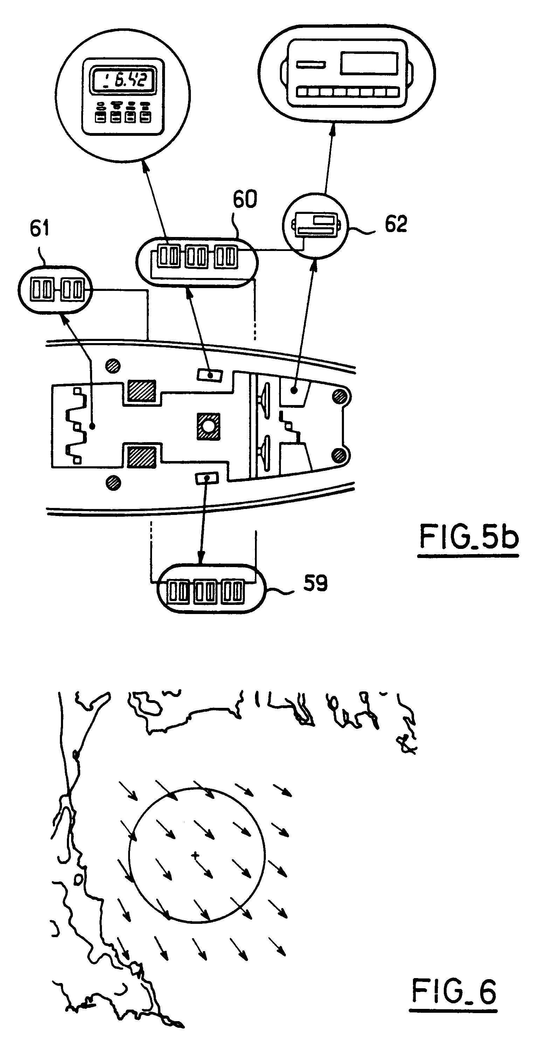

En outre, ainsi qu'on l'a représenté en figure 5b, chaque voilier Vj comporte au niveau des postes clés du voilier, un ou plusieurs systèmes d'affichage permettant l'affichage de la valeur en temps réel d'un ou plusieurs paramètres dynamiques correspondants du vaisseau. Sur la figure 5b, un système d'affichage bâbord est noté 59, un système d'affichage tribord est noté 60 et un système afficheur central est noté 61, l'ensemble des systèmes d'affichage 59, 60 ou 61 étant relié par un circuit d'interface d'affichage 62, représenté en figure 4b et 5b, au microordinateur d'acquisition esclave 12 par l'intermédiaire d'une liaison du type RS232C.

L'ensemble de l'équipement représenté en figure 4a, 4b, 5a, 5b, permet d'assurer le contrôle de l'instrumentation électronique et le suivi de celle-ci sur le moniteur d'affichage TVj de chaque vaisseau Vj, l'acquisition des données émises par le moyen de communication Vji, la distribution des paramètres dynamiques du vaisseau Vj sur l'ensemble des afficheurs 59, 60, 61, ces afficheurs constitués par exemple par des afficheurs à cristaux liquides étant disposés aux différents postes clés du vaisseau Vj, la transmission de données ou paramètres de fonctionnement dynamique du vaisseau Vj au microordinateur maître ou tactique 11, et le stockage des données en fichier de mesure sur la mémoire de masse du microordinateur esclave 12. Cette mémoire de masse peut être constituée par exemple par une mémoire à bulle ou par un disque dur.

Le microordinateur maître 11 fonctionne en partage de charge avec le microordinateur esclave dit d'acquisition 12 et assure toutes les fonctions de pilotage du vaisseau Vj et en particulier lorsque celui-ci est constitué par un voilier équipé pour une régate, toutes les fonctions tactiques habituelles découlant des règles de régate officielles. Bien entendu le programme de l'ordinateur ou microordinateur tactique 11 peut être adapté en fonction de la nature du vaisseau Vj. Dans le cas où le vaisseau Vj est constitué par un bateau de pêche, ou un bateau de fret tel qu'un cargo, le programme dit programme tactique est remplacé par un programme de navigation, lequel peut être réduit à un programme de contrôle des paramètres essentiels de fonctionnement du vaisseau correspondant.

Dans le cas où le vaisseau Vj est constitué par un voilier, de manière avantageuse non limitative, et en vue d'intégrer au système d'aide à la navigation objet de l'invention des paramètres intrinsèques à l'environnement météorologique et/ou topologique du site de navigation, les moyens calculateurs CM du site central et/ou le deuxième microordinateur esclave 12 de chaque vaisseau Vj comportent, stockées dans leur mémoire de masse, des données représentatives du profil côtier de la zone ou site de navigation et des données représentatives du champ de vitesse et de direction des vents et des courants sur la zone de navigation.

Sur la figure 6, on a représenté de manière non limitative une page écran susceptible d'apparaître au niveau des moyens d'affichage TVj de chacun des vaisseaux Vj ou au niveau du terminal de visualisation TVM du site central M. La page écran précitée comporte le profil côtier correspondant auprès duquel évolue le bateau Vj correspondant ainsi que la matérialisation du champ de vent représentée par des flèches réparties sur la zone de navigation. Les données précitées sont transmises par les deuxièmes moyens de communication Mj du site central M vers chacun des vaisseaux Vj et peuvent alors être mémorisées dans les mémoires de masse de l'ordinateur ou microordinateur d'acquisition 12. Bien entendu, la mémorisation peut être effectuée directement au niveau des mémoires de masse du microordinateur d'acquisition 12 directement, l'ensemble constitué par le microordinateur tactique 11 et le microordinateur d'acquisition ou microordinateur esclave 12 pouvant alors ainsi devenir autonome.

Bien entendu, les données précédentes sont rafraîchies périodiquement. Les données précitées relatives au champ de vent sont établies de manière statistique en fonction du site de navigation et en particulier du relief côtier correspondant une estimée de l'évolution probable du champ de vent en direction et en amplitude étant obtenue par exemple selon la méthode développée par les travaux de A.KUHN, G.SABIN et D.WISDORFF, ces travaux étant plus particulièrement connus sous le nom de la méthode des polygones de brise. Pour une description plus détaillée de l'utilisation de cette méthode pour la détermination statistique des champs de vent en amplitude et en direction, on pourra se reporter à la publication de Dominic BOURGEOIS, publication intitulée "Les secrets de la baie de Quiberon" parue dans la revue "Bateaux" n^{o} 314 et publiée en 1984.

En outre, le système d'aide à la navigation objet de l'invention permet d'intégrer à celui-ci des paramètres intrinsèques au vaisseau Vj ou voilier. Dans ce but, les moyens calculateurs CM du site central M et/ou le deuxième microordinateur esclave 12 comportent stockées dans la mémoire de masse correspondante, des données représentatives des performances du vaisseau Vj en fonctionnement dynamique de celui-ci.

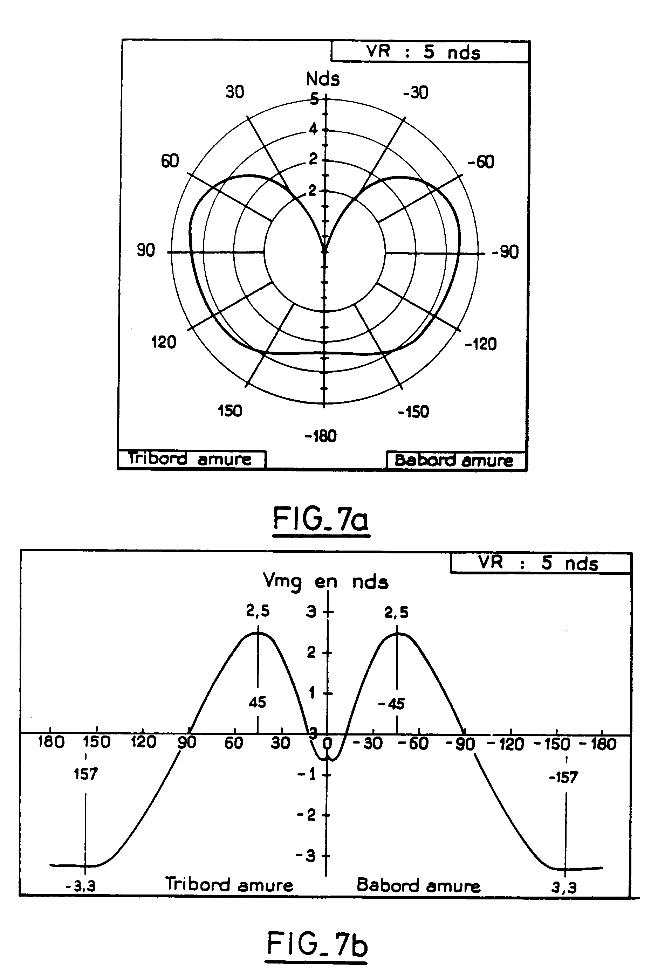

Ainsi qu'on l'a représenté en figure 7a et 7b, lorsque le vaisseau Vj est un voilier, les données représentatives du vaisseau Vj en fonction dynamique correspondent à une représentation en coordonnées polaires, en ce qui concerne la figure 7a ou cartésiennes pour la figure 7b, de la vitesse exprimée en noeud du vaisseau Vj par rapport à l'angle de direction du vent par rapport à l'axe du vaisseau. Sur la figure 7a, le rayon polaire est gradué en vitesse exprimée en noeud et l'angle correspondant en degré.

Sur la figure 7b, l'axe des abscisses est gradué en degré et l'axe des ordonnées en vitesse effective du bateau, vitesse effective connue sous le vocable anglo-saxon de "velocity made good" ou VMG. La vitesse effective est la vitesse de remontée dans l'axe du vent réel, c'est-à-dire la projection de la vitesse du bateau sur la direction du vent réel. Cette valeur est très utile pour la conduite du voilier lorsque celui-ci navigue au près et en vent arrière puisque le but de ces allures est de se rapprocher ou de s'éloigner le plus rapidement possible du vent. La vitesse effective ou VMG traduit donc cette vitesse et constitue une valeur exacte de ce que l'on appelle le compromis cap/vitesse. La vitesse effective ou VMG dépend de l'objectif que l'on se fixe : par exemple en cas de navigation au largue la vitesse effective sera la vitesse la plus élevée en direction de la bouée de largue.

Selon une caractéristique avantageuse, les données représentées en figure 7a et 7b correspondent à la vitesse relative de surface ou de fond du vaisseau Vj et les angles de direction du vent à l'angle de direction du vent réel ou du vent apparent.

Bien entendu, les valeurs précitées comportent des valeurs remarquables de référence pour lesquelles la vitesse effective VMG du vaisseau Vj est maximale dans les cas de navigation au près ou de navigation vent arrière. Ces valeurs remarquables peuvent alors être utilisées judicieusement par le tacticien du vaisseau Vj.

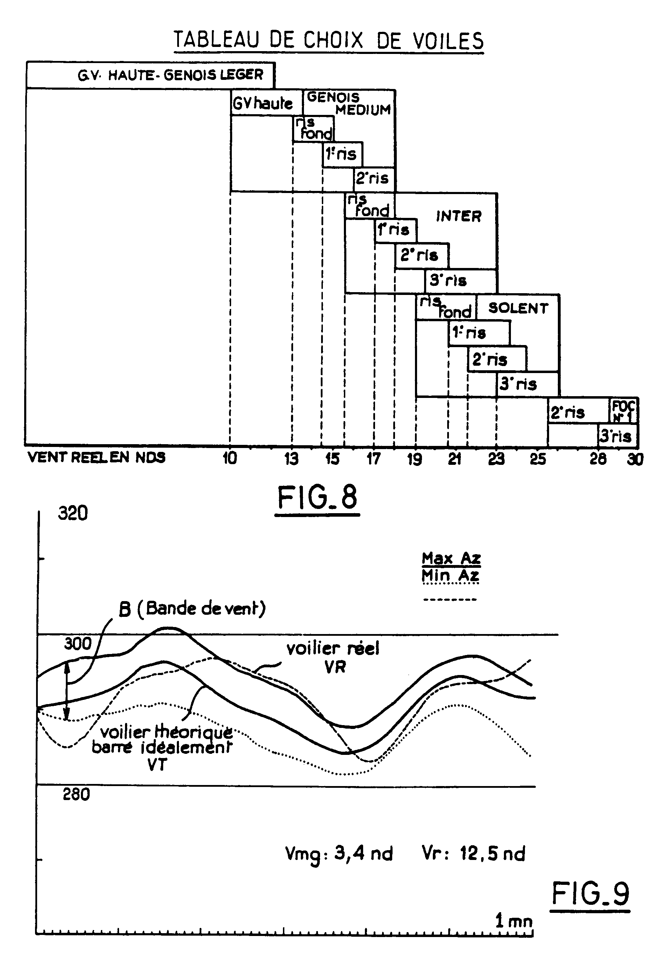

En outre, ainsi qu'on l'a représenté en figure 8, les données représentatives du vaisseau lorsque celui-ci est un voilier, correspondent à un choix de combinaison de voile en fonction des prévisions du vent, le choix de la combinaison de voile correspondant à celui pour lequel le changement de voile d'avant, c'est-à-dire dans le cas d'un voilier le foc et le génois, intervient le plus tard possible. Sur la figure 8, on a représenté en fonction de la vitesse réelle du vent exprimée en noeuds la situation ou position des voiles, position optimale pour assurer un changement de voile d'avant le plus tard possible. On remarquera que pour les faibles vitesses de vent, la grand voile et/ou le génois léger sont complètement déployés et les ris de fond et premier et ris successifs étant successivement repliés en fonction de la vitesse croissante du vent, les voiles d'avant étant alors successivement changées en génois moyen ou génois médium, inter, solent et foc. L'abaque représentatif des données de changement de voile en figure 8 permet alors d'indiquer au tacticien la meilleure combinaison possible de voile pour un bateau de modèle considéré.

Le système de contrôle et/ou d'aide à la navigation objet de l'invention dans le cas où les vaisseaux Vj sont constitués par des voiliers permettent aussi d'intégrer des paramètres intrinsèques aux qualités du barreur de chaque vaisseau Vj. Dans ce but, les moyens calculateurs CM du site central M et/ou le premier microordinateur maître 11, peuvent comporter, stockées dans la mémoire de masse de ces derniers, des données représentatives du vaisseau ou voilier Vj barré de manière idéale. Le caractère idéal de conduite du voilier Vj est défini comme le maintien d'une relation d'angle de phase sensiblement constant entre le cap défini obtenu par le barreur pour le voilier Vj et la direction du vent réel.

Sur la figure 9, on a représenté en ordonnées l'azimut de la direction du vent réel et en abscisse la variation de cet azimut en fonction du temps. Le relevé est effectué sur une durée de une minute. La direction du vent réel fluctue entre deux valeurs extrémales autour d'une valeur moyenne, laquelle varie de manière périodique, la direction du vent effective étant comprise dans une bande de vent notée B, de largeur sensiblement constante. Sur la figure 9, on a tracé d'une part la variation correspondante d'orientation de l'axe d'un voilier réel barré par un barreur de bon niveau, ce tracé étant représenté au trait pointillé et portant la référence VR. La direction ou angle de phase entre l'azimut moyen du vent et l'orientation de l'axe du vaisseau réel n'est pas constante et le rendement effectif du voilier réel en vitesse effective par exemple, n'est pas optimal. Au contraire, l'angle de phase constant du voilier théorique correspondant au tracé VT en trait continu sur la figure 9 présente un angle de phase sensiblement constant par rapport à l'azimut instantané du vent réel. La direction ou azimut du vent réel est définie dans le temps comme l'azimut moyen correspondant de la direction du vent réel auquel est superposée une variation instantanée de cette direction par rapport à la direction moyenne, variation provoquée par des turbulences propres à l'ensemble site de navigation-voilier, la direction du vent réel étant définie ainsi que précédemment mentionnée, comme une bande de vent B.

Les données précitées permettent donc de comparer le trajet du barreur réel à celui du voilier barré de manière idéale, et de rechercher les séquences de navigation à améliorer.

Au cours d'essais, on a constaté qu'un barreur de très haut niveau peut suivre le trajet du voilier barré de manière idéale, pendant sensiblement une trentaine de secondes sur une durée totale de une minute. C'est-à-dire que 50 % du temps, le barreur navigue à la perfection. Mais cependant, tout le retard s'accumule dans les périodes où le vent est imperceptiblement défavorable, ce caractère imperceptible étant dû au fait que les variations de l'azimut du vent dans la bande de vent ne sont pas décelables au compas, car trop faibles, le barreur devant alors faire l'effort mental d'admettre de s'écarter de la route normale pour conserver sa vitesse maximale. Sur un bord de louvoyage, statistiquement d'après des enregistrements effectués, on a constaté autant de rotations favorables de vent que défavorables, ce qui simplement a pour conséquence que 50 % du temps le barreur doit faire preuve d'une grande maîtrise à la barre pour accepter cette situation obligatoire et défavorable momentanément. La prise en compte des données relatives au trajet du voilier barré de manière idéale permet de prendre en compte ses différences et à titre d'exemple, sur 10 secondes la différence entre un barreur qui suit parfaitement une rotation de 5° du vent à une vitesse de six noeuds et celui qui garde une trajectoire droite la différence de gain au vent est de 1,80 mètres.

Les paramètres intrinsèques au voilier précédemment défini ou au barreur ou les paramètres relatifs au site de navigation sont particulièrement utiles lorsque le système d'aide à la navigation objet de l'invention est utilisé pour l'aide à la navigation de compétitions ou régates de voiliers.

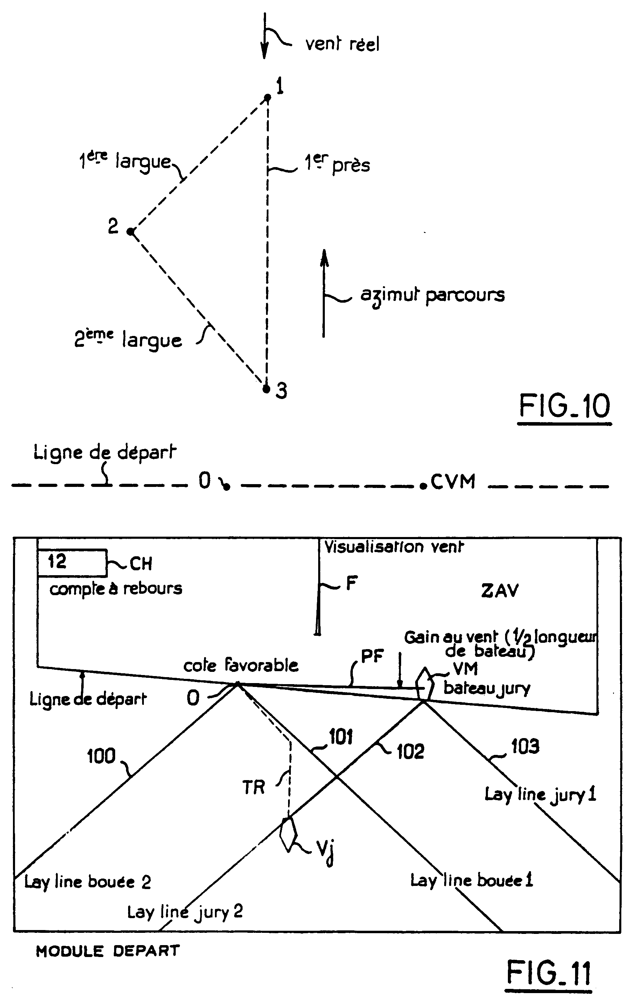

Sur la figure 10, on a représenté un parcours officiel de régates, le parcours étant matérialisé par une première bouée ou marque de départ notée 0, le bateau comité chargé de la gestion et du contrôle de la régate, bateau noté VM, une première bouée notée 3 se trouvant à proximité de la ligne de départ constituée par l'alignement de la première bouée 0 et du bateau comité VM une deuxième bouée ou marque notée 1 et une troisième bouée notée 2 définissant le parcours. On notera que de manière générale, l'azimut moyen du parcours est représenté par la direction définie par les bouées 3 et 1, cette direction étant alignée avec la direction moyenne du vent réel. Ainsi, après franchissement de la ligne de départ, et navigation dans le sens d'azimut du parcours, le trajet entre les marques 3 et 1 constitue un parcours de premier près, le trajet entre les marques 1 et 2 constitue un parcours au largue ou premier largue, et le parcours entre les marques 2 et 3 constitue un parcours au largue ou deuxième largue.

Afin d'assurer une aide à la navigation dans le cas d'un parcours tel que représenté en figure 10, le calculateur CM du site central M ou l'ordinateur maître 11 de chaque vaisseau Vj peut comporter un programme tactique d'aide à la navigation. Ce programme tactique est un programme de type menu comportant au moins après affichage sur l'écran de visualisation TVj correspondant de la carte du site de navigation, un premier sous-programme d'acquisition de données appelé par validation d'un mode approche, un deuxième sous-programme de départ appelé par validation d'un mode départ, et un troisième sous-programme de navigation appelé par validation d'un mode navigation. Bien entendu, dans le cas d'une régate, le troisième sous-programme de navigation est constitué par un programme dit de course appelée par validation d'un mode de course.

Dans le cas où les vaisseaux Vj sont constitués par des voiliers en instance de régate de compétition, le premier sous-programme d'acquisition de données comprend avantageusement une procédure de contrôle permettant d'afficher, à l'écran des moyens de visualisation TVj, les valeurs brutes des différents capteurs décrits précédemment, une procédure de changement d'échelle de la carte du site de navigation, une procédure d'entrée de la position en latitude et longitude des marques telles que les marques 0, 1, 2, 3 précitées, ainsi que la position en latitude ou longitude du bateau comité VM, une procédure de validation du temps restant avant le départ, et une procédure d'introduction de la valeur du courant marin en direction et en vitesse.

La procédure d'entrée de la position en latitude et longitude des marques du parcours de la régate peut comporter avantageusement des sous-routines correspondant à l'entrée des données des marques de parcours ou bouée en latitude ou longitude, à la validation de la position du vaisseau comité, à la validation de la marque de départ, marque 0, à l'entrée de l'azimut moyen du parcours et à la validation de la dernière marque du parcours, à l'entrée de la longueur du parcours et à la validation de la phase retour. En effet, lorsque un vaisseau Vj constitué par un voilier est en instance de départ, celui-ci effectue en amont de la ligne de départ, un circuit lui permettant de passer à proximité de la bouée de départ 0 et du vaisseau comité VM, sans franchir cependant la ligne de départ sous peine de disqualification. Ces manoeuvres préalables ont été représentées en figure 11, et suite au passage en mode départ, le programme correspondant au mode départ permet sur l'écran de visualisation TVj de chaque vaisseau Vj, l'affichage sur une page-écran correspondante de la zone au vent au delà de la ligne de départ, zone notée ZAV sur la figure 11, une flèche indiquant la direction en azimut du vent réel instantané, flèche notée F sur la figure 11, une ligne perpendiculaire à la direction du vent réel, ligne notée PF sur la figure 11, ligne indiquant ainsi le côté avantageux babord amure ou tribord amure du vaisseau, de ligne de câdre ou en vocable anglo-saxon "lay-lines" définissant, pour le voilier Vj considéré, la zone limite autorisée dans laquelle ledit voilier peut tirer des bords. Sur la figure 11, les lignes de cadre sont notées 100, 101, 102, 103, les lignes de cadre sont définies comme les limites d'angle de remontée au vent possible d'un voilier Vj, ligne rapportée à un point de référence telle qu'une marque, la marque 0 pour les lignes 100 et 101, les bateaux comités notés VM pour les lignes 102 et 103. L'angle de remontée au vent est défini par l'angle de la direction du vent réel et de l'axe du bateau rapporté sur le point de référence précité. En outre, sur la page-écran apparaît également la trajectoire effective du voilier dans la zone limite, la trajectoire représentée en pointillé sur la figure 11 est notée TR. En outre, un chronomètre noté CH est représenté, lequel permet de donner le compte à rebours jusqu'à l'instant de départ.

Les différentes informations apparaissant sur la page-écran sont particulièrement utiles au tacticien du voilier Vj, dans la mesure où elles permettent de rendre effective la position du voilier Vj par rapport à la ligne de départ compte tenu de la direction du vent, et lui donnent ainsi une idée de la route optimale à suivre au moment du départ. Enfin, sur sa demande, le tacticien pourra connaître la distance à parcourir en suivant une route de ligne de cadre et ainsi mieux évaluer la route et l'option à suivre pour prendre un bon départ.

Suite à la validation du mode navigation, et en particulier du mode course lorsque la ligne de départ a été franchie, lorsque le voilier Vj est en compétition, le programme de navigation correspond à un mode de course comportant notamment les procédures de définition et d'affichage des lignes de cadre ou lay-lines du voilier Vj par rapport à la marque suivante, la marque numéro 3 par exemple représentée en figure 10. Cette procédure comporte une sous-routine de calcul et d'affichage de la distance du vaisseau Vj à la ligne de cadre vers laquelle elle se dirige, distance parallèle à l'autre ligne de cadre. En outre, le mode de course comporte une procédure de changement d'échelle et une procédure de visualisation de la direction du vent réel dans une durée de temps antérieur déterminée, une procédure dite girouette permettant d'indiquer les zones d'évolution du vent. En outre, une procédure de navigation au largue ou vent arrière peut être prévue, ainsi qu'une procédure de validation de marque permettant sur validation par le barreur ou le tacticien la prise en compte de l'ordinateur maître du changement de bord. Bien entendu, une procédure de retour au menu principal est prévue afin d'assurer une bonne souplesse d'utilisation du programme interactif de type menu.

C'est en effet dans cette phase de navigation au cours d'une régate officielle que le programme trouve en fait toute sa raison d'être. Le premier objectif est de renseigner le tacticien sur la position géographique par des moyens les plus explicites possibles. Ce renseignement est donné au tacticien par l'intermédiaire de pages-écran particulièrement adaptées lui permettant d'appréhender le maximum d'informations par simple observation du terminal de visualisation TVj.

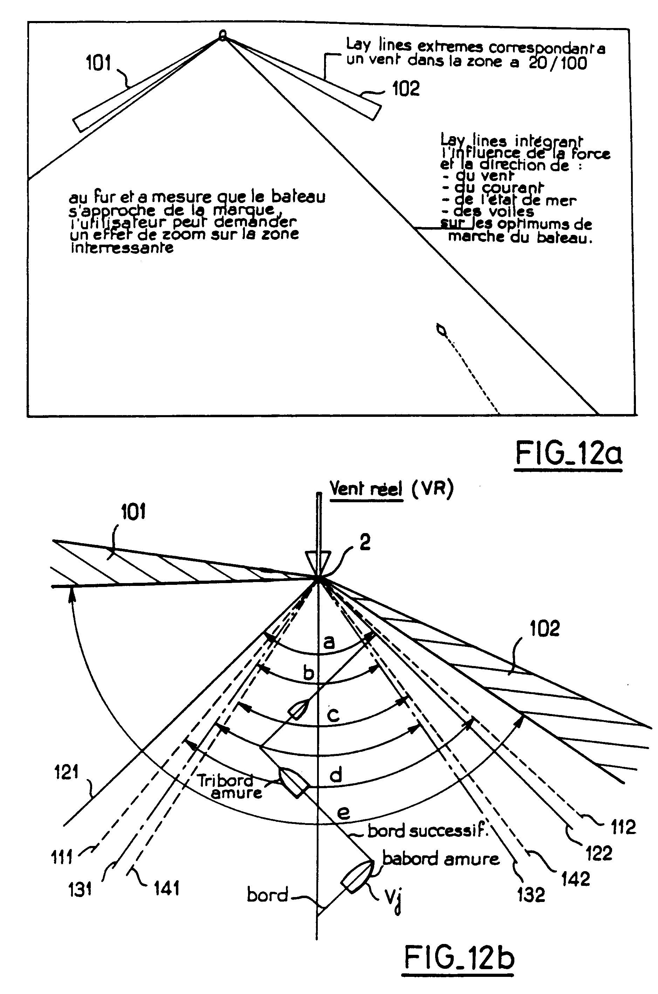

Dans ce but, la procédure de définition et d'affichage des lignes de cadre ou lay-lines du voilier Vj permettent l'affichage de ces dernières sur une page-écran, selon un diagramme de type camembert, ainsi qu'il sera décrit plus en détail en liaison avec les figures 12a et 12b.

Ainsi qu'on l'a représenté sur les figures précitées, le diagramme comporte avantageusement une pluralité de secteurs circulaires ou lignes comportant deux secteurs circulaires 101, 102 définissant une zone angulaire correspondant aux limites des lignes de cadre en fonction du relief, lesdites limites étant calculées à partir de la position fond du vaisseau Vj par rapport au relief côtier. La page-écran précitée comporte en outre deux premières lignes 111, 112, contenues dans la zone limite et définissant une zone angulaire d correspondant à deux lignes de cadre calculées par rapport au fond, c'est-à-dire au relief côtier et deux deuxièmes lignes 121, 122, contenues dans la zone limite et définissant une zone angulaire a correspondant à deux lignes de cadre de surface calculées à partir de la vitesse de surface du vaisseau Vj et du vent apparent, paramètres délivrés par les différents capteurs. En outre, deux troisièmes lignes 131 et 132 sont prévues, ces lignes étant contenues dans la zone limite et définissant une zone angulaire b correspondant, compte tenu des caractéristiques hydrodynamiques du vaisseau, à des lignes de cadre de marche idéale. Deux quatrièmes lignes 141 et 142 sont en outre contenues dans la zone limite et définissent une zone angulaire c correspondant à des lignes de cadre représentatives dans le temps de l'évolution du vent en direction par rapport à l'échelle horaire, les lignes de cadre étant déterminées à partir de statistique d'évolution du vent dans le temps sur le site de navigation correspondant.

En outre un deuxième objectif est de donner au tacticien des renseignements sur l'état du vent rencontré par rapport aux caractéristiques micrométéorologiques au cours de campagne de prospection de données météorologiques sur le site de la régate.

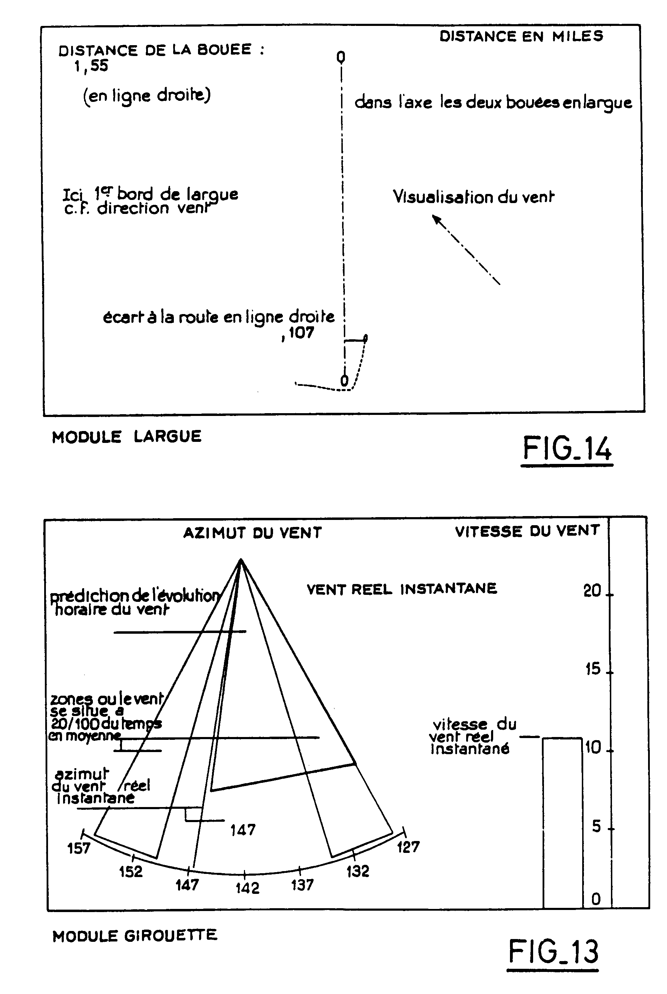

Dans ce but, la procédure de visualisation de la direction du vent réel dans une durée de temps antérieure déterminée et la procédure girouette permettent l'affichage sur une page-écran selon un diagramme de type camembert, ainsi que représenté en figure 13 de l'historique de la direction du vent réel depuis le début de l'enregistrement avec indication des extréma droite et gauche de la direction instantanée du vent réel et de l'estimée de l'évolution de la direction du vent réel dans un temps détermine.

En outre, une indication de l'amplitude de la vitesse du vent réel instantanée est également donnée sur la page-écran représentée en figure 13.

En outre, la procédure de navigation au largue ou vent arrière peut comporter avantageusement une page-écran permettant l'affichage de la distance dans l'axe des deux bouées de largue, c'est-à-dire la bouée ou marque numéro 1, 2, et 2, 3 par exemple. Cette page écran est représentée en figure 14. Cette page écran permet de donner comme information au tacticien l'écart à la route en ligne droite entre les deux bouées ou marque de largue, la visualisastion de la direction du vent par rapport à l'axe des deux bouées de largue ainsi que la distance à la marque suivante par exemple. Cette distance est exprimée en ligne droite.

Un objectif général du programme tactique précédemment décrit est d'intégrer en fait les deux premiers objectifs précités relatifs aux renseignements sur la position géographique et sur l'état de vent rencontré aux caractéristiques du voilier Vj pour donner une idée de route optimale et de risque pris en suivant cette route.

Cet objectif est atteint par l'intermédiaire de l'affichage des lignes de cadre ou lay-lines où est représenté le voilier Vj et la prochaine marque avec les routes optimales joignant cette marque. Les zones 101 et 102 des figures 12a et 12b constituent des butée de ligne de cadre ou de lay-lines, lesquelles indiquent les variations possibles des lay-lines et la zone hachurée correspondant au secteur 101, 102 représente la zone à haut risque à ne pas franchir. En outre, il est possible pour le tacticien, d'interroger l'ordinateur sur l'effet d'une bascule d'un nombre n de degrés des lignes de cadre précitées sur la distance à parcourir. L'ensemble des informations ainsi présentées au tacticien permet d'intégrer tous les renseignements pour une meilleure aide à la tactique à suivre au cours de la régate.

En outre, un module permet également de préparer le bord suivant en fournissant des éléments de tactique avec les conditions rencontrées au moment de la demande route optimale, gain, valeur du vent apparent par exemple.

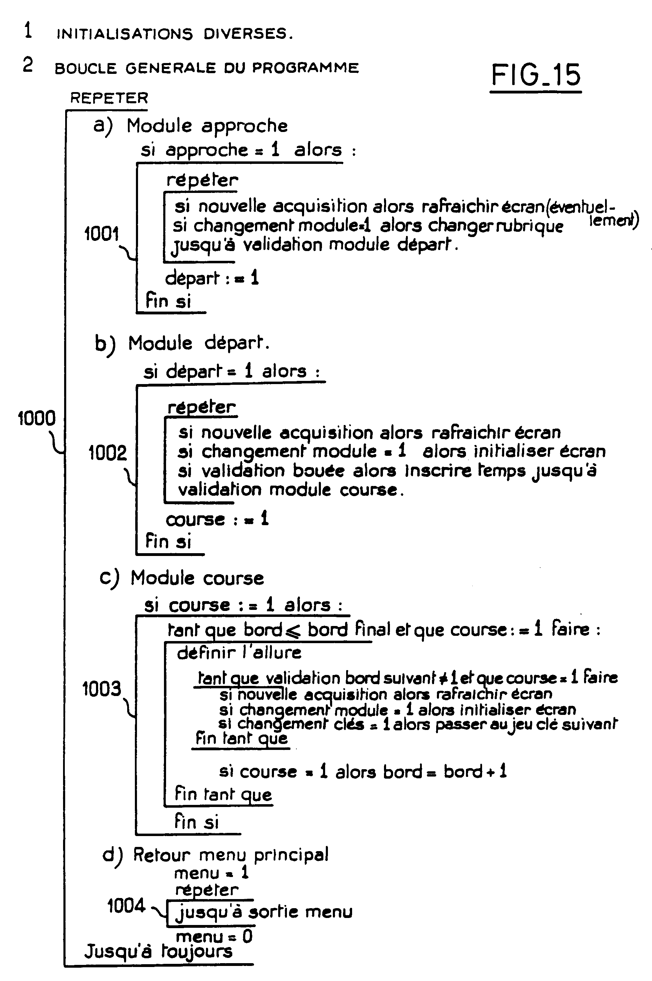

Une description succinte de la structure du programme tactique sera donnée en liaison avec la figure 15, laquelle correspond plus à un organigramme du programme précité.

Selon cette figure, le programme tactique d'aide à la navigation comporte suite à une phase d'initialisation diverse, une boucle de répétition générale (1000) dans laquelle les sous-programmes (1001,1002,1003,1004) correspondants au mode approche au mode départ et au mode navigation ou course et au mode retour au menu principal se sont intégrés.

On a ainsi décrit un système de contrôle et/ou d'aide à la navigation maritime ou à la circulation particulièrement performant dans la mesure où ce système présente un très grand caractère adaptatif. En effet, celui-ci permet le pilotage de vaisseaux les plus divers tels que des bateaux de pêche, des bateaux de frêt tels que des cargos ou des voiliers. Dans le cas particulier des voiliers l'aide à la navigation de ces derniers, lorsque ceux-ci sont en situation de compétition en régate officielle, apparaît particulièrement avantageux dans la mesure où le système permet d'intégrer des caractéristiques intrinsèques à chaque voilier, en fonction de ses caractéristiques propres hydrodynamiques, ces caractéristiques étant introduites dans le système sous forme de valeurs ou données représentatives d'abaque de performance mesurée et de modèle mathématique.

En outre, le système de contrôle et/ou d'aide à la navigation objet de l'invention permet également d'intégrer des paramètres intrinsèques au barreur conduisant ce voilier des qualités propres du barreur telles que le toucher de barre où la manière de barrer étant identifiée et déterminée par rapport à la conduite idéale d'un voilier de même type.

Enfin, le système de contrôle et d'aide à la navigation objet de l'invention, dans le cas où celui-ci est appliqué à des voiliers, permet également d'intégrer des caractéristiques propres au milieu ou zone de navigation, ces caractéristiques correspondant à la prédiction du vent à court terme ou à moyen terme à la simulation d'un champ de vent et éventuellement à l'introduction de valeurs en direction et en vitesse de courant.

La mise en oeuvre du système objet de l'invention permet de gérer en temps réel de un à quarante voiliers par exemple à l'aide d'un calculateur disposé en site central, ainsi que décrit précédemment.

On comprendra également que le système de contrôle et/ou d'aide à la navigation maritime objet de l'invention permet à la fois la gestion d'un nombre de bateaux, mobiles ou vaisseaux importants, et également de constituer un système d'aide à l'apprentissage à la navigation dans la mesure où les ordres ou commandes donnés à partir du site central oú les valeurs de paramètres relatives à chaque voilier peuvent être transmis à chacun de ceux-ci pour affichage et pour utilisation par le barreur concerné.

## Revendications

1. Système de contrôle ou d'aide à la navigation maritime ou à la circulation d'une pluralité de vaisseaux ou mobiles (Vj), comportant :
- un système de radionavigation de référence comportant au moins deux sources balises de référence (Si, Si+1) et étant un système de radionavigation fixe à localisation de type hyperbolique ou circulaire ou un réseau de satellites artificiels,
- un site central (M) de contrôle de la navigation, fixe ou mobile, lesdits site central (M) et vaisseaux ou mobiles (Vj) étant chacun munis respectivement, d'une part, d'un premier moyen de communication (MI) entre ledit site central (M) et les sources balises de référence (Si, Si+1) et d'un deuxième moyen de communication (Mj) entre ledit site central (M) et chaque vaisseau (Vj) et d'autre part d'un moyen de communication (Vji) entre chaque source balise de référence (Si, Si+1) et chaque vaisseau ou mobile (Vj),
ledit système de contrôle ou d'aide à la navigation ou à la circulation étant caractérisé en ce que ledit site central (M) comporte en outre :
- des moyens calculateurs (CM) assurant, à partir du calcul des distances (MSi), (SiVj) établies à partir des temps de trajet des ondes du système de radionavigation utilisé et séparant ledit site central (M) et chaque vaisseau ou mobile (Vj) de chaque balise de référence (Si), (Si+1), le calcul des positions dudit site (M) et de chaque vaisseau ou mobile (Vj) par rapport au système de radionavigation de référence et l'affichage, en temps réel, à l'aide de moyens d'affichage (TVM), de la position de chaque vaisseau ou mobile (Vj) par rapport audit site central (M), les moyens calculateurs (CM) comportant des moyens de determination de distance du type à localisation circulaire ou hyperbolique et utilisant les distances précédemment établies pour calculer lesdites positions,
lesdits moyens calculateurs assurant en outre l'affichage sur l'écran de visualisation de la carte du site de navigation ou de circulation et comportant un programme d'aide à la navigation ou à la circulation, et en ce que chaque vaisseau ou mobile (Vj) comporte, outre ledit moyen de communication (Vji) entre chaque source balise de référence (Si, Si+1) et chaque vaisseau ou mobile (Vj), un terminal d'affichage (TVj) assurant l'affichage en temps réel au moins de la position du ou des vaisseaux d'ordre j considéré par rapport au site central (M), ledit terminal d'affichage (TVj) étant constitué par un microordinateur embarqué (OVj) sur chaque vaisseau ou mobile (Vj), muni de ses éléments périphériques ainsi que d'un programme d'aide à la navigation du type précité, ledit microordinateur embarqué (OVj) comportant, en vue d'intégrer au système d'aide à la navigation des paramètres de navigation intrinsèques à chaque vaisseau ou mobile (Vj) :
- un premier microordinateur maître (11) assurant la conduite tactique de l'aide à la navigation, muni de ses éléments périphériques et dudit programme d'aide à la navigation,
- un deuxième microordinateur esclave (12) dit d'acquisition, muni de ses éléments périphériques et assurant l'acquisition des données ou paramètres dynamiques du vaisseau (Vj) considéré et le séquencement des moyens de communication (Vji),
chaque vaisseau ou mobile (Vj) comportant des capteurs d'acquisition dynamiques qui assurent la délivrance d'un signal représentatif du paramètre dynamique correspondant audit deuxième microordinateur esclave.

2. Système selon la revendication 1, caractérisé en ce que ledit programme d'aide à la navigation ou à la circulation est un programme de type "Menu", comportant au moins :
i) un sous-programme de navigation ou circulation appelé par validation d'un mode navigation,
ii) un sous-programme d'acquisition de données, appelé par validation d'un mode approche,
iii) un sous-programme de départ appelé par validation d'un mode départ.

3. Système selon la revendication 2, caractérisé en ce que, dans le cas où les mobiles (Vj) sont constitués par des voiliers en instance de régate de compétition, ledit sous-programme d'acquisition de données comprend :
- une procédure de contrôle assurant l'affichage à l'écran des valeurs brutes des différents capteurs,
- une procédure de changement d'échelle de la carte du site de navigation,
- une procédure d'entrée de la position en latitude et longitude des marques du parcours de la régate,
- une procédure de validation du temps restant avant le départ,
- une procédure d'introduction de la valeur du courant marin en direction et vitesse.

4. Système selon la revendication 3, caractérisé en ce que ladite procédure d'entrée de la position en latitude et longitude des marques du parcours de la régate comporte les sous routines :
- d'entrée des coordonnées des marques de parcours ou bouées en latitude ou longitude,
- de validation du vaisseau comité (MV)
- de validation de la marque de départ
- d'entrée de l'azimut moyen du parcours
- de validation de la dernière marque du parcours
- d'entrée de longueur du parcours
- de validation de phase retour.

5. Système selon l'une des revendications 2 à 4, caractérisé en ce que, suite au passage en mode départ, ledit sous-programme correspondant au mode départ assure, sur l'écran de visualisation (TVj) de chaque vaisseau (Vj), l'affichage sur une page écran correspondante :
- de la zone au vent (ZAV) au-delà de la ligne de départ,
- d'une flèche indiquant la direction en azimut du vent réel instantané,
- d'une ligne perpendiculaire à la direction du vent réel indiquant ainsi le côté avantageux babord amure ou tribord amure de la ligne,
- de lignes de cadres ou "lay lines" définissant pour le voilier (Vj) considéré la zone limite autorisée dans laquelle ledit voilier peut tirer des bords,
- la trajectoire effective du voilier dans ladite zone limite
- un chronomètre (CH).

6. Système selon l'une des revendications 2 à 5, caractérisé en ce que, suite à la validation du mode navigation, lequel dans le cas de voiliers en compétition, ledit sous-programme de navigation est un programme correspondant à un mode de course comportant :
- une procédure de définition et d'affichage des lignes de cadre ou "lay lines" du voilier (Vj) par rapport à la marque suivante, ladite procédure comportant une sous routine de calcul et d'affichage de la distance du vaisseau (Vj) à la ligne de cadre vers laquelle il se dirige, distance parallèle à l'autre ligne de cadre,
- une procédure de changement d'échelle, et
- une procédure de visualisation de la direction du vent réel dans une durée de temps antérieure déterminée,
- une procédure dite girouette assurant l'indication des zones d'évolution du vent,
- une procédure de navigation au largue ou vent arrière,
- une procédure de validation de marque assurant, sur validation par le barreur tacticien, la prise en compte par l'ordinateur maître du changement de bord,
- une procédure de retour au menu principal.

7. Système selon la revendication 6, caractérisé en ce que ladite procédure de définition et d'affichage des lignes de cadre ou "lay lines" du voilier assurent l'affichage de ces dernières sur une page-écran selon un diagramme de type "camembert", ledit diagramme comportant une pluralité de secteurs circulaires comportant :
- deux secteurs circulaires limites (101,102) définissant une zone angulaire (a) correspondant aux limites des lignes de cadre en fonction du relief, lesdites limites étant calculées à partir de la position fond du vaisseau (Vj) par rapport au relief côtier,
- deux premières lignes (111,112) contenues dans ladite zone limite et définissant une zone angulaire (d) correspondant à deux lignes de cadre calculées par rapport au fond, c est-à-dire au relief côtier,
- deux deuxième lignes (121,122) contenues dans ladite zone limite et définissant une zone angulaire (a) correspondant à deux lignes de cadre de surface, calculées à partir de la vitesse de surface du vaisseau (Vj) et du vent apparent, paramètres délivrés par les différents capteurs,
- deux troisième lignes (131,132) contenues dans ladite zone limite et définissant une zone angulaire (b) correspondant, compte tenu des caractéristiques hydrodynamiques du vaisseau, à des lignes de cadre de marche idéale,
- deux quatrième lignes (141,142) contenues dans ladite zone limite et définissant une zone angulaire (c) correspondant à des lignes de cadre représentatives dans le temps de l'évolution du vent en direction par rapport à l'échelle horaire, lesdites lignes de cadre étant déterminées à partir de statistiques d'évolution du vent dans le temps sur le site de navigation correspondant.

8. Système selon la revendication 6 ou 7, caractérisé en ce que ladite procédure de visualisation de la direction du vent réel dans une durée de temps antérieure déterminée et ladite procédure girouette assurent l'affichage sur une page-écran, selon un diagramme de type "camembert", de l'historique de la direction du vent réel depuis le début de l'enregistrement avec indication des extrêmes droite et gauche, de la direction instantanée du vent réel, de l'estimée de l'évolution de la direction dudit ven réel dans un temps déterminé.

9. Système selon l'une des revendications 2 à 8, caractérisé en ce que ledit programme d'aide à la navigation comporte, suite à une phase d'initialisations diverses, une boucle de répétition générale dans laquelle les sous-programmes correspondant au mode approche, au mode départ et au mode navigation ou course sont intégrés.

10. Système selon l'une des revendications précédentes, caractérisé en ce que les capteurs d'acquisition des paramètres dynamiques sont, lorsque les vaisseaux sont constitués par des voiliers, :
- une girouette et un anémomètre de portant (50)
- une girouette et un anémomètre de près (51)
- un capteur d'angle de barre (52)
- un capteur d'angle de trimmer (53)
- un compas babord (54) et un compas tribord (55)
- un capteur de vitesse babord (56) et un capteur de vitesse tribord (57)
- une centrale à inertie (58) délivrant une information d'inclinaison de site et de tangage.

11. Système selon la revendication 10, caractérisé en ce que, en vue d'intégrer au système d'aide à la navigation des paramètres intrinsèques à l'environnement météorologique et/ou topologique du site de navigation, lesdits moyens calculateurs (CM) dudit site central et/ou ledit deuxième microordinateur esclave de chaque vaisseau ou mobile (Vj) comportent, stockées dans leur mémoire de masse :
- des données représentatives du profit côtier de la zone ou site de navigation,
- des données représentatives du champ de vitesse et de direction des vents et des courants sur ladite zone de navigation, lesdites données étant transmises par ledit deuxième moyen de communication (Mj) du site central (M) vers chacun des vaisseaux (Vj) et/ou mémorisées dans lesdites mémoires de masse dudit ordinateur d'acquisition.

12. Système selon la revendication 11, caractérisé en ce que lesdites données sont refraîchies périodiquement.

13. Système selon l'une des revendications précédentes, caractérisé en ce que ledit vaisseau ou mobile comporte, au niveau des postes clés du vaisseau ou mobile (Vj), un ou plusieurs systèmes d'affichage assurant l'affichage de la valeur en temps réel d'un ou plusieurs paramètres dynamiques correspondants du vaisseau ou mobile.

14. Système selon l'une des revendications précédentes, caractérisé en ce que, en vue d'intégrer au système d'aide à la navigation des paramètres intrinsèques au vaisseau (Vj) ou mobile, lesdits moyens calculateurs (CM) dudit site central (M) et/ou ledit deuxième microordinateur esclave (12) comportent, stockées dans la mémoire de masse correspondante, des données représentatives des performances du vaisseau ou mobile (Vj) en fonctionnement dynamique de celui-ci.

15. Système selon la revendication 14, caractérisé en ce que, lorsque ledit vaisseau (Vj) est un voilier, lesdites données représentatives du vaisseau (Vj) en fonctionnement dynamique de celui-ci correspondent à une représentation en coordonnées cartésiennes ou polaires de la vitesse exprimée en noeuds du vaisseau (Vj) par rapport a l'angle de direction du vent par rapport à l'axe du vaisseau.

16. Système selon la revendication 15, caractérisé en ce que les données correspondent à la vitesse relative de surface ou de fond du vaisseau (Vj) et les angles de direction du vent à l'angle de direction du vent réel ou du vent apparent.

17. Système selon l'une des revendications 14 ou 15, caractérisé en ce que lesdites valeurs comportent des valeurs remarquables de référence pour lesquelles la vitesse effective (VMG) du vaisseau (Vj) est maximale dans les cas de navigation au près, de navigation vent arrière.

18. Système selon l'une des revendications 15 à 17, caractérisé en ce que lesdites données représentatives du vaisseau, lorsque celui-ci est un voilier, correspondent à un choix de combinaison de voiles en fonction des prévisions de vent, le choix de la combinaison de voiles correspondant à celui pour lequel le changement de voile d'avant foc ou génois intervient le plus tard possible.

19. Système selon la revendication 10 prise seule ou en combinaison avec l'une des revendications précédentes, caractérisé en ce que, en vue d'intégrer au système d'aide à la navigation des paramètres intrinsèques aux qualités du barreur de chaque vaisseau (Vj), constitué par un voilier, lesdits moyens calculateurs (CM) dudit site central (M) et/ou ledit premier microordinateur maître comporte, stockées dans sa mémoire de masse des données représentatives du vaisseau ou voilier (Vj) barré de manière idéale, le caractère idéal de conduite ou barre dudit voilier (Vj) étant défini comme le maintien d'une relation d'angle de phase sensiblement constant entre le cap défini et tenu par le barreur pour le voilier (Vj) et la direction du vent réel.

20. Système selon la revendication 19, caractérisé en ce que la direction du vent réel est définie, dans le temps, comme l'azimut moyen correspondant de la direction du vent réel auquel est superposée une variation instantanée de cette direction par rapport à cette direction moyenne, variation provoquée par des turbulences propres à l'ensemble site de navigation-voilier, la direction du vent réel étant définie comme une bande de vent.

21. Système selon la revendication 1, caractérisé en ce que ledit site central (M) est mobile et constitué par un vaisseau maître.

22. Système selon la revendication 1, caractérisé en ce que ledit site central (M) est fixe et constitué par un poste central à terre.

23. Système selon l'une des revendications 21 ou 22, caractérisé en ce que ledit moyen de communication (Vji) de chaque vaisseau ou mobile(Vj), assurant la communication entre chaque source balise de référence (Si, Si+1) et chaque vaisseau (Vj) et la retransmission vers ledit deuxième moyen de communication (Mj) dudit site central (M), comprend un répondeur.

## Claims

1. A system to control sea navigation or traffic of a plurality of ships or moving bodies (Vj), comprising :
· a radio navigation reference system, comprising at least two reference beacon sources (Si, Si+1) ;
· a fixed or mobile navigation control central station (M), said central station (M) and the ships or moving bodies (Vj), each being respectively provided, firstly, with a first communication means (MI) between said central station (M) and the reference beacon sources (Si, Si+1) and a second communication means (Mj) between said central station (M) and each ship or moving body (Vj) and, secondly, an communication means (Vji) between each reference beacon source (Si, Si+1) and each ship or moving body,
characterized in that said central station further comprises :
- computing means (CM) providing, through the computation of the distances (MSi, SiVj) established from the times taken by the waves of the radionavigation system used to travel from said central station (M) and each ship or moving body (Vj) to each reference beacon (Si, Si+1, the computation of the positions of said station (M) and each ship or moving body (Vj), with respect to the reference radionavigation system, and the displaying, in real-time, through display means (TVM), of the position of each ship or moving body (Vj) with respect to the central station (M), the computing means (CM) comprising means for distance determination of the type with circular or hyperbolic localization and using the distances previously established to compute the positions, said computing means further providing the displaying on the visual display unit of the map of the navigation or traffic zone, and comprising a program for assistance with navigation or traffic,
· each ship or moving body (Vj) comprises, in addition to said communication (Vji) between each reference beacon source (Si, Si+1) and each ship or moving body (Vj), a display terminal (TVj) enabling the real time display of at least the position of the order j ship or ship considered, with respect ot the central station (M), said display terminal (TVj) consisting of a microcomputer (OVJ) on board each ship or moving body (Vj) provided with its peripheral element and an assistance navigation system of the cited type, said microcomputer on board (OVj) comprising, in order to integrate navigational parameters intrinsic to each ship on moving body (Vj) :
- a first master microcomputer (11) used for the tactical direction of navigational assistance, provided with its peripheral elements and said assistance navigation system,
- a second slave microcomputer (12), called an acquisition computer, provided with its peripheral elements and enabling the acquisition of the dynamic parameters or data on the ship (Vj) considered and the sequencing of the communication means (Vji), each ship or moving body (Vj) comprising the dynamical acquisition transducer which provides a signal representative of the dynamical parameter corresponding to said second slave microcomputer.

2. A system according to claim 1, characterized in that program for navigation or traffic assistance, is a program of the "Menu" type, comprising at least:
- (i) a first data acquisition sub-program called up by validation of an approach mode;
- (ii) a second starting sub-program called up by validation of a starting mode;
- (iii) a third navigation sub-program called up by validation of a navigation mode.

3. A system according to claim 2, characterized in that the moving bodies (Vj) consist of sailboats about to take part in a competition regatta, said first data acquisition sub-program comprises:
- a control procedure enabling the display of raw data, from the different sensors, on the screen;
- a procedure to change the scale of the map of the navigation zone;
- a procedure for the input of the position in latitude and longitude of the marks of the regatta course;
- a procedure to validate the time remaining before the start;
- a procedure to introduce the value of the sea current in terms of direction and speed.

4. A system accrding to claim 3, characteized in that procedure for the input of the position, in latitude and longitude, of the marks of the regatta course, comprises the sub-routines:
- for the input of the coordinates of the course marks or buoys in latitude and longitude; for the validation of the comittee boat (MV) ;
- for the validation of the starting mark;
- for the input of the mean azimuth of the course;
- for the validation of the last mark of the course;
- for the input of the course length;
- for the validation of the return stage.

5. A system according to any of claims characterized in that, following the passage to the starting mode, said program corresponding to the starting mode enables, on the display, on a corresponding screen page:
- of the windward zone (ZAV) beyond the starting line;
- of an arrow indicating the azimuthal direction of the instantaneous true wind;
- of a line perpendicular to the direction of the true wind, thus indicating the advantageous side, for port tacking or starboard tacking, of the line;
- of lay-lines defining, for the sailboat (Vj) considered, the permitted limit zone in which said sailboat can perform tacking manoeuvers;
- the effective path of the sailboat in said limit zone;
- a timer (CH).

6. A system according to claims 2 to 5, characterized in that following the validation of the navigation mode, in the case of sailboats in competition, said navigation program is a program corresponding to a race mode comprising:
- a procedure to define and display lay-lines of the ship (Vj) with respect to the next mark , said method comprising a sub-routine to compute and display the distance of the ship (Vj) from the lay-line towards which it is moving, a distance which is parallel to the other lay-line.
- a procedure for changing scale, and
- a procedure to display the direction of the true wind in a determined, previous period of time;
- a so-called burgee procedure making it possible to indicate the zones of change in the wind;
- a downwind navigation procedure;
- a mark-validating procedure enabling the master computer, upon validation by the tactician helmsman, to take the tacking into account;
- a procedure to return to the main menu.

7. A system according to claim 6, characterized in that said procedure for the definition and display of the lay-lines of the sailboat enable the display of these lines on a screen page in a pie chart type of diagram, said diagram comprising a plurality of circular sectors comprising:
- two limit circular sectors (101, 102) defining an angular zone (a) corresponding to the limits of the lay-lines as a function of the relief, said limits being computed from the sea-bed position of the ship (Vj) with respect to the coastline:
- two first lines (111, 112) contained in said limit zone and defining an angular zone (d) corresponding to two lay-lines computed with respect to the sea bed, namely to the coastline;
- two second lines (121, 122) , contained in said limit zone and defining an angular zone corresponding to two surface lay-lines, computed from the surface speed of the ship (Vj) and of the apparent wind, these parameters being given by the different sensors;
- two third lines (131, 132), contained in said limit zone and defining an angular zone corresponding, given the hydrodynamic characteristics of the ship, to ideal functioning
- two fourth lines (141, 142), contained in said limit zone and defining an angular zone (C) corresponding to lay-lines that represent, in time, changes in the direction of the wind with respect to the hourly scale, said lay-lines being determined from statistics on changes in the wind, in time, at the corresponding navigation zone.

8. A system according to claim 6 or 7, characterized in that said procedure to display the direction of the true wind in a determined, prior time period and said burgee procedure enable the display, on a screen page, in a pie chart type of diagram, of the chronology of the direction of the true wind since the beginning of the recording, with indications of right-hand and left-hand extremes, the instantaneous direction of the true wind, and the estimate of changes in the direction of the true wind in a determined time.

9. A system according to any of claims 2 to 8, characterized in that said tactical program for assistance with navigation comprises, after a stage of various initialization operations, a general repetition loop into which the sub-programs corresponding to the approach mode, the starting mode and the navigation or race mode, are integrated.

10. A system according to any of the preceding claims characterized in that, in order to provide for the acquisition of the dynamic parameters of the ship considered, each of the ships has, when laid ships are sailboats:
- a downwind anemometer or burgee (50);
- a windward anemometer or burgee (51);
- a rudder angle sensor (52);
- a trim angle sensor (53);
- a port compass (54) and a starboard compass (55);
- a port speed sensor (56) and a starboard speed sensor (57);
- an inertial guidance system (58) giving information on heel and pitch.

11. A system according to claim 10 characterized in that, in order to integrate parameters instrinsic to the meteorological and /or topological environment of the navigation zone into the navigation assistance system, said computing means (CM) of said central station and/or said second slave microcomputer of each ship on moving body (Vj) comprises, stored in their storage memory:
- data representing the coastline of the navigation zone or area;
- data representing the range of speed and direction of the winds and currents in said navigation zone, said data being transmitted by said second communication means (Mj) from the central station (M) to each of the ships (Vj) and/or being stored in said storage memories of said acquisition computer.

12. A system according to claim 11, characterized in that said data are periodically refreshed.

13. A system according to any of the preceding claims, characterized in that the ship or moving body comprises, at the key working posts of said ship or moving body (Vj), one or a plurality of display systems providing the displaying of the real-time value of one or a plurality of dynamical parameters corresponding to the ship or moving body.

14. A system according to any of the preceding claims, characterized in that in order to integrate parameters intrinsic to the ship or moving body (Vj) into the system for navigation assistance, said computing means (CM) of said central station (M) and/or said second slave microcomputer (12) have, stored in the corresponding storage memory, data representing the performance values of the ship or moving body (Vj) during its dynamic operation.

15. A system according to claim 14, characterized in that when said ship (Vj) is a sailboat, said data representing the ship (Vj) in its dynamic operation correspond to a representation , in Cartesian or polar coordinates, of the ship's (Vj) speed, expressed in knots, with respect to the angle of direction of the wind with refernce to the ship's center line.

16. A system according to claim 15, characterized in that the data correspond to the ship's relative surface or sea bed speed and the angles of direction of the wind at the angle of direction of the true wind and that of the apparent wind.

17. A system according to claim 14, characterized in that said values comprise noteworthy reference values for which the ship's (Vj) "velocity made good" (VMG) is at its maximum value in the cases of windward navigation and downwind navigation.

18. A system according to any of claims 15 to 17 characterized in that said data representing the ship, when it is a sailboat, correspond to a choice of combination of sails according to wind forecasts, the choice of combination of sails corresponding to that for which the changing of foresail, jib or genoa takes place as late as possible.

19. A system according to claim 10 alone or in combination with any of the preceding claims, characterized in that in order to integrate parameters intrinsic to the helmsman of each ship (Vj) consisting of a sailboat, into the navigation assistance system, said computing means (CM) of said central station (M) and/or said first master microcomputer comprise, stored in their storage memory, data representating the ideally steered ship or sailboat (Vj), the ideal character of the steering of said sailboat being defined as the maintaining of a substantially constant phase angle relationship between the course defined and held to by the helmsman, for the sailboat, and the direction of the true wind.

20. A system according to claim 19, characterized in that the direction of the true wind is defined, in time, as the mean azimuth corresponding to the direction of the true wind, on which is superimposed an instantaneous varaiation of this direction with respect to this mean direction, a variation caused by turbulence phenomena proper to the whole formed by the navigation zone and the sailboat, the direction of the true wind being defined as a wind zone.

21. A system according to claim 1, characterized in that the central station (M) is mobile and consists of a master ship.

22. A system according to claim 1, characterized in that said central station (M) is fixed and consists of a land-based center.

23. A system according to any of claims 21 or 22, characterized in that the communication means (Vji) of each ship or moving body (Vj) enabling communication between each reference beacon source (Si, Si+1) and each ship (Vj), and retransmission to said second communication (Mj) means of said central station (M), comprises a transponder.

## Patentansprüche

1. System zur Überwachung oder zur Hilfe bei maritimer Navigation oder dem Verkehr einer Mehrzahl von Schiffen oder Mobilen (Vj) umfassend:
- ein Funknavigationsbezugssystem, das mindestens zwei Bezugsfunkfeuer (Si, Si+1) umfaßt und ein festes Funknavigationssystem zur Ortsbestimmung vom hyperbolischen oder zirkularen Typ oder vom Typ mit einem Netz künstlicher Satelliten ist,
- einen zentralen Ort (M) zur Überwachung der Navigation, der fest oder mobil ist, wobei der genannte zentrale Ort (M) und die genannten Schiffe oder Mobile (Vj) jeweils einerseits mit einer ersten Einrichtung zur Kommunikation (MI) zwischen dem genannten zentralen Ort (M) und den Bezugsfunkfeuern (Si, Si+1) und einer zweiten Einrichtung zur Kommunikation (Mj) zwischen dem genannten zentralen Ort (M) und jedem Schiff (Vj) und andererseits mit einer Einrichtung zur Kommunikation (Vji) zwischen jeder Bezugsfunkfeuerquelle (Si, Si+1) und jedem Schiff oder Mobilen (Vj) ausgerüstet sind,
wobei das genannte System zur Überwachung oder zur Hilfe bei der Navigation oder beim Verkehr dadurch gekennzeichnet ist, daß der genannte zentrale Ort (M) ferner umfaßt:
- Berechnungseinrichtungen (CM), die auf der Grundlage der Berechnung der Entfernungen (MSi), (SiVj), die auf der Grundlage der Laufzeit der Wellen des verwendeten Funknavigationssystems bestimmt worden sind und die den genannten zentralen Ort (M) und jedes Schiff oder Mobile (Vj) von jedem Bezugfunkfeuer (Si), (Si+1) trennen, die Berechnung der Positionen des genannten Ortes (M) und von jedem Schiff oder Mobilen (Vj) in bezug auf das Funknavigationsbezugssystem und die Anzeige der Position von jedem Schiff oder Mobilen (Vj) in bezug auf den genannten zentralen Ort (M) in Realzeit mit Hilfe von Anzeigeeinrichtungen (TVM) sicherstellen, wobei die Berechnungseinrichtungen (CM) Einrichtungen zum Bestimmen des Abstandes vom Typ mit zirkularer oder hyperbolischer Ortung umfassen und die vorhergehend bestimmten Strecken verwenden, um die genannten Positionen zu berechnen,
wobei die genannten Berechnungseinrichtungen ferner die Anzeige der Karte des Bereiches der Navigation oder des Verkehrs auf dem Bildschirm sicherstellen und ein Programm zur Hilfe bei der Navigation oder dem Verkehr umfassen, und daß jedes Schiff oder Mobile (Vj) außer der genannten Einrichtung zur Kommunikation (Vji) zwischen jedem Bezugsfunkfeuer (Si, Si+1) und jedem Schiff oder Mobilen (Vj) eine Anzeigestation (TVj) umfaßt, die in Realzeit die Anzeige wenigstens der Position des Schiffes oder der Schiffe der Ordnung (j), die in bezug auf den zentralen Ort (M) betrachtet wird, sicherstellt, wobei die genannte Anzeigestation (TVj) von einem Mikrocomputer (OVj) gebildet ist, der sich bei jedem Schiff oder Mobilen (Vj) an Bord befindet und mit seinen Peripheriegeräten sowie einem Programm zur Hilfe bei der Navigation vom vorgenannten Typ ausgerüstet ist, wobei der sich an Bord befindende Mikrocomputer (OVj) im Hinblick darauf, in das System zur Hilfe der Navigation jedem Schiff oder Mobilen (Vj) zu eigene Navigationsparameter zu integrieren, umfaßt:
- einen ersten Hauptmikrocomputer (11), der das taktische Verhalten der Hilfe bei der Navigation sicherstellt und mit seinen Peripheriegeräten und dem genannten Programm zur Hilfe bei der Navigation ausgerüstet ist,
- einen zweiten Arbeitsmikrocomputer (12), Datenerfassungs-Mikrocomputer genannt, der mit seinen Peripheriegeräten ausgerüstet ist und die Erfassung von Daten oder dynamischen Parametern des betrachteten Schiffes (Vj) und die Abfolge der Kommunikationseinrichtungen (Vji) sicherstellt,
wobei jedes Schiff oder Mobile (Vj) dynamische Erfassungsfühler umfaßt, die das Liefern eines Signals, das für den entsprechenden dynamischen Parameter repräsentativ ist, zu dem zweiten Arbeitsmikrorechner sicherstellen.

2. System gemäß Anspruch 1, dadurch gekennzeichnet, daß das genannte Programm zur Hilfe bei der Navigation oder bei dem Verkehr ein Programm vom Typ "Menü" ist, das wenigstens umfaßt:
i) ein Unterprogramm für die Navigation oder den Verkehr, das durch Validisierung eines Navigationsmodus aufgerufen wird,
ii) ein Unterproramm zur Daten-Erfassung, das durch Validisierung eines Näherungsmodus aufgerufen wird,
iii) ein Start-Unterprogramm, das durch Validisierung eines Startmodus aufgerufen wird.

3. System gemäß Anspruch 2, dadurch gekennzeichnet, daß in dem Fall, wo die Mobilen (Vj) von Segelschiffen bei einer Wettkampfregatta gebildet sind, das genannte Unterprogramm zur Datenerfassung umfaßt:
- eine Steuerprozedur, die das Anzeigen der groben Werte der verschiedenen Fühler auf dem Bildschirm sicherstellt,
- eine Prozedur zum Ändern des Maßstabes der Karte des Navigationsbereiches,
- eine Prozedur zum Eingeben der Positionen der Markierungen der Regattastrecke in Breite und Länge,
- eine Prozedur zur Validisierung der Zeit, die vor dem Start verbleibt,
- eine Prozedur zum Einführen des Wertes der Meeresströmung mit Richtung und Geschwindigkeit.

4. System gemäß Anspruch 3, dadurch gekennzeichnet, daß die genannte Prozedur zum Eingeben der Position der Markierungen der Regattastrecke in Breite und Länge die Routinen umfaßt:
- zur Eingabe der Koordinaten der Markierungen der Strecke oder der Bojen in Breite und Länge,
- zur Validisierung des Komiteeschiffes (MV)
- zur Validisierung der Startmarkierung
- zur Eingabe des mittleren Azimut der Rennstrecke
- zur Validisierung der letzten Markierung der Rennstrecke
- zur Eingabe der Länge der Strecke
- zur Validisierung der Rückkehrphase.

5. System gemäß einem der Ansprüche 2 bis 4, dadurch gekennzeichnet, daß im Anschluß an den Übergang in den Start-Modus das genannte entsprechende Unterprogramm im Start-Modus auf dem Bildschirm (TVj) von jedem Schiff (Vj) auf einer entsprechenden Bildschirmseite die Anzeige sicherstellt:
- der Windzone (ZAV) jenseits der Startlinie,
- eines Pfeils, der in Azimut-Richtung den momentanen, tatsächlichen Wind anzeigt,
- einer zu der Richtung des tatsächlichen Windes senkrechten Linie, die somit die vorteilhafte Seite für die Backbord-Halse oder Steuerbord-Halse der Linie angibt,
- von Rahmenlinien oder "lay lines", die für das betrachtete Segelschiff (Vj) die zulässige Grenzzone definieren, in der das Segelschiff kreuzen kann,
- die effektive Bahn des Segelschiffes in der genannten Grenzzone,
- ein Chronometer (CH).

6. System gemäß einem der Ansprüche 2 bis 5, dadurch gekennzeichnet, daß im Anschluß an die Validisierung des Navigationsmodus, im Fall von Segelschiffen im Wettkampf, das genannte Unterprogramm zur Navigation ein Programm ist, das einem Wettrennmodus entspricht und umfaßt:
- eine Prozedur zur Definition und zur Anzeige von Rahmenlinien oder "lay lines" des Segelschiffes (Vj) in bezug auf die folgende Markierung, wobei die genannte Prozedur eine Unterroutine zur Berechnung und Anzeige der Entfernung des Schiffes (Vj) von der Rahmenlinie umfaßt, zu der es sich bewegt, eine zu der anderen Rahmenlinie parallele Entfernung,
- eine Prozedur zum Ändern des Maßstabes, und
- eine Prozedur zur Sichtbarmachung der tatsächlichen Windrichtung während einer vorher bestimmten Zeitdauer,
- eine Prozedur, Windrichtungsanzeige genannt, die die Angabe der Entwicklungszonen des Windes sicherstellt,
- eine Prozedur zur Navigation bei schrägem oder Rückenwind,
- eine Prozedur zur Validisierung der Markierung, die auf Validisierung durch den taktischen Rudergänger die Berücksichtigung der Schlagänderung durch den Hauptrechner sicherstellt,
- eine Prozedur zum Zurückkehren zum Hauptmenü.

7. System nach Anspruch 6, dadurch gekennzeichnet, daß die genannte Prozedur zur Definition und zur Anzeige der Rahmenlinien oder "lay lines" des Segelschiffes die Anzeige dieser letzteren auf einer Bildschirmseite gemäß einem Diagramm vom Typ "Camenbert" sicherstellen, wobei das genannte Diagramm eine Mehrzahl von Kreissektoren aufweist, die umfassen:
- zwei Kreissektor-Grenzen (101, 102), die eine Winkelzone (a) definieren, die den Grenzen der Rahmenlinien als Funktion des Reliefs entsprechen, wobei die genannten Grenzen auf der Grundlage der Grundposition des Segelschiffes (Vj) in bezug auf das Küstenrelief berechnet werden,
- zwei erste Linien (111, 112), die in der genannten Grenzzone enthalten sind und eine Winkelzone (d) definieren, die zwei Rahmenlinien entspricht, die in bezug auf das Land berechnet worden sind, das heißt auf das Küstenrelief,
- zwei zweite Linien (121, 122), die in der genannten Grenzzone enthalten sind und eine Winkelzone (a) definieren, die zwei Oberflächen-Rahmenlinien entsprechen, die auf der Grundlage der Oberflächengeschwindigkeit des Schiffes (Vj) und des scheinbaren Windes berechnet worden sind, Parameter, die von den unterschiedlichen Fühlern geliefert worden sind,
- zwei dritte Linien (131, 132), die in der genannten Grenzzone enthalten sind und eine Winkelzone (b) definieren, die unter Berücksichtigung der hydrodynamischen Eigenschaften des Schiffes den Rahmenlinien der idealen Fahrt entsprechen,
- zwei vierte Linien (141, 142), die in der genannten Grenzzone enthalten sind und eine Winkelzone (c) definieren, die Rahmenlinien entsprechen, die in der Zeit für die Entwicklung des Windes nach der Richtung in bezug auf den Zeitplan repräsentativ sind, wobei die genannten Rahmenlinien auf der Grundlage der Statistik der Windentwicklung mit der Zeit in dem entsprechenden Navigationsbereich bestimmt werden.

8. System gemäß Anspruch 6 und 7, dadurch gekennzeichnet, daß die genannte Prozedur des Sichtbarmachens der tatsächlichen Windrichtung während einer früheren, bestimmten Zeitdauer und die genannte Prozedur zur Windrichtungsanzeige die Anzeige der Geschichte der Richtung des tatsächlichen Windes seit Beginn der Aufzeichnung mit Angabe des linken und des rechten Extremums, der momentanen Richtung des tatsächlichen Windes, der Abschätzung der Entwicklung der Richtung des genannten tatsächlichen Windes während einer bestimmten Zeit auf einer Bildschirmseite mit einem Diagramm vom Typ "Camenbert" sicherstellen.

9. System gemäß einem der Ansprüche 2 bis 8, dadurch gekennzeichnet, daß das genannte Programm zur Hilfe bei der Navigation im Anschluß an eine Phase verschiedener Initialisierungen eine allgemeine Wiederholungsschleife umfaßt, in der die Unterprogramme eingegliedert sind, die dem Näherungsmodus, dem Startmodus und dem Navigations- oder Wettsegelmodus entsprechen.

10. System gemäß einem der vorhergehenden Ansprüche, dadurch gekennzeichnet, daß die Fühler zur Erfassung der dynamischen Parameter, wenn die Schiffe von Segelschiffen gebildet sind, sind:
- ein Vorwindklicker und ein Vorwindanemometer (50)
- ein Nachwindklicker und ein Nachwindanemometer (51)
- ein Fühler für den Winkel des Steuerruders (52)
- ein Fühler für den Winkel des Trimmer (53)
- ein Backbordkompaß (54) und einen Steuerbordkompaß (55)
- einen Backbord-Geschwindigkeitsfühler (56) und einen Steuerbord-Geschwindigkeitsfühler (57)
- eine Trägheitsstation (58), die eine Information über die Ortskrägung und über die Tauchschwingung liefert.

11. System gemaß Anspruch 10, dadurch gekennzeichnet, daß im Hinblick darauf, in das System zur Hilfe bei der Navigation eigentliche Parameter der meteorologischen und/oder topologischen Umgebung des Navigationsbereiches zu integrieren, die genannten Berechnungseinrichtungen (CM) des genannten zentralen Ortes und/oder der genannte zweite Arbeitsmikrocomputer von jedem Schiff oder Mobilen (Vj) in ihrem Massenspeicher gespeichert umfassen:
- Daten, die für das Küstenprofil der Zone oder den Bereich der Navigation repräsentativ sind,
- Daten, die für das Geschwindigkeitsfeld und die Richtung der Winde und der Strömungen in der genannten Navigationszone repräsentativ sind, wobei die genannten Daten durch die genannte zweite Einrichtung zur Kommunikation (Mj) des zentralen Ortes (M) zu jedem der Schiffe (Vj) übertragen und/oder in den genannten Massenspeichern des genannten Computers zur Erfassung gespeichert werden.

12. System gemäß Anspruch 11, dadurch gekennzeichnet, daß die genannten Daten periodisch aktualisiert werden.

13. System gemäß einem der vorhergehenden Ansprüche, dadurch gekennzeichnet, daß das genannte Schiff oder Mobile auf der Höhe des Schlüsselpostens des Schiffes oder des Mobilen (Vj) ein oder mehrere Anzeigesysteme umfaßt, die die Anzeige des Wertes von einem oder mehreren dynamischen Parametern in Realzeit sicherstell(en)t, die dem Schiff oder Mobilen entsprechen.

14. System gemaß einem der vorhergehenden Ansprüche, dadurch gekennzeichnet, daß im Hinblick darauf, in das System zur Hilfe bei der Navigation eigentliche Parameter des Schiffes (Vj) oder des Mobilen zu integrieren, die genannten Berechnungseinrichtungen (CM) des zentralen Ortes (M) und/oder der genannte zweite Arbeitsmikrocomputer (12) in ihrem entsprechenden Massenspeicher Daten gespeichert umfassen, die für die Arbeitsweise des Schiffes oder Mobilen (Vj) bei seinem dynamischen Betrieb repräsentativ sind.

15. System gemäß Anspruch 14, dadurch gekennzeichnet, daß, wenn das genannte Schiff (Vj) ein Segelschiff ist, die genannten Daten, die für das Schiff (Vj) bei seinem dynamischen Betrieb repräsentativ sind, einer Darstellung in cartesischen Koordinaten oder Polarkoordinaten der in Knoten ausgedrückten Geschwindigkeit des Schiffes (Vj) in bezug auf den Winkel der Windrichtung in bezug auf Schiffsachse entsprechen.

16. System gemäß Anspruch 15, dadurch gekennzeichnet, daß die Daten der relativen Geschwindigkeit der Oberfläche oder dem Kielraum des Schiffes (Vj) und die Winkel der Windrichtung dem Winkel der tatsächlichen oder der scheinbaren Windrichtung entsprechen.

17. System gemäß einem der Ansprüche 14 oder 15, dadurch gekennzeichnet, daß die genannten Werte die besonderen Bezugswerte umfassen, für die die tatsächliche Geschwindigkeit (VMG) des Schiffes (Vj) in dem Fall der Gegenwind-Navigation, der Navigation mit Rückenwind mit maximal ist.

18. System gemäß einem der Ansprüche 15 bis 17, dadurch gekennzeichnet, daß die genannten repräsentativen Daten für das Schiff, wenn dieses ein Segelschiff ist, einer Wahl von Segelkombinationen als Funktion der Windvorhersagen entsprechen, wobei die Wahl der Segelkombination derjenigen entspricht, bei der die Änderung der Fock oder der Genua so spät wie möglich auftritt.

19. System gemäß Anspruch 10 allein oder in Kombination mit einem der vorhergehenden Ansprüche genommen, dadurch gekennzeichnet, daß im Hinblick darauf, in das System zur Hilfe bei der Navigation den Eigenschaften des Rudergängers von jedem Schiff (Vj), das von einem Segelschiff gebildet ist, zu eigene Parameter zu integrieren, die genannten Berechnungseinrichtungen (CM) des genannten zentralen Ortes (M) und/oder der genannte erste Hauptmikrocomputer in ihren/m Massenspeicher gespeicherte Daten umfassen, die für das in idealer Weise gesteuerte Schiff oder Segelschiff (Vj) repräsentativ sind, wobei der ideale Charakter des Lenkens oder Steuerns des genannten Segelschiffes (Vj) als das Aufrechterhalten einer im wesentlichen konstanten Phasenwinkelbeziehung zwischen dem festgelegten und von dem Rudergänger für das Segelschiff (Vj) gehaltenen Kurs und der tatsächlichen Windrichtung festgelegt ist.

20. System gemäß Anspruch 19, dadurch gekennzeichnet, daß die tatsächliche Windrichtung in der Zeit als der mittlere Azimut definiert ist, der der tatsächlichen Windrichtung entspricht, dem eine momentane Änderung dieser Richtung in bezug auf diese mittlere Richtung überlagert ist, eine Änderung, die durch der Gesamtheit von Navigationsbereich-Segelschiff zu eigene Störungen hervorgerufen wird, wobei die tatsächliche Windrichtung als ein Windband definiert ist.

21. System gemäß Anspruch 1, dadurch gekennzeichnet, daß der genannte zentrale Ort (M) beweglich ist und von einem Hauptschiff gebildet ist.

22. System gemäß Anspruch 1, dadurch gekennzeichnet, daß der genannte zentrale Ort (M) fest ist und von einer zentralen Bodenstation gebildet ist.

23. System gemäß einem der Ansprüche 21 oder 22, dadurch gekennzeichnet, daß die genannte Einrichtung zur Kommunikation (Vji) von jedem Schiff oder Mobilen (Vj), die die Verbindung zwischen jeder Bezugsfunkfeuerquelle (Si, Si+1) und jedem Schiff (Vj) und die Zurückübertragung zu der genannten zweiten Einrichtung zur Kommunikation (Mj) des genannten zentralen Ortes (M) sicherstellt, einen Antwortsender umfaßt.
